(19) Europäisches Patentamt / European Patent Office / Office européen des brevets

(11) **EP 3 131 848 B1**

(12) **EUROPEAN PATENT SPECIFICATION**

(45) Date of publication and mention
of the grant of the patent:
**28.03.2018 Bulletin 2018/13**

(51) Int Cl.:
*C01B 32/00* (2017.01)          *C01B 32/05* (2017.01)
*H01M 4/36* (2006.01)          *H01M 4/587* (2010.01)
*B01J 13/02* (2006.01)

(21) Application number: **15719635.3**

(22) Date of filing: **14.04.2015**

(86) International application number:
**PCT/EP2015/058112**

(87) International publication number:
**WO 2015/158741 (22.10.2015 Gazette 2015/42)**

(54) **AMORPHOUS CARBON COATING OF CARBONACEOUS PARTICLES FROM DISPERSIONS INCLUDING AMPHIPHILIC ORGANIC COMPOUNDS**

**AMORPHE KOHLENSTOFFBESCHICHTUNG VON KOHLENSTOFFHALTIGEN PARTIKELN AUS DISPERSIONEN MIT AMPHIPHILEN ORGANISCHEN VERBINDUNGEN**

**REVÊTEMENT DE CARBONE AMORPHE DE PARTICULES CARBONÉES À PARTIR DE DISPERSIONS COMPRENANT DES COMPOSÉS ORGANIQUES AMPHIPHILES**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.04.2014 EP 14164651**

(43) Date of publication of application:
**22.02.2017 Bulletin 2017/08**

(73) Proprietor: **Imerys Graphite & Carbon Switzerland Ltd.**
**6743 Bodio (CH)**

(72) Inventors:
• **MICHAUD, Julie**
**CH-6500 Bellinzona (CH)**

• **SPAHR, Michael**
**CH-6500 Bellinzona (CH)**
• **ZÜRCHER, Simone**
**CH-6954 Origlio (CH)**

(74) Representative: **Eder, Michael**
**df-mp Dörries Frank-Molnia & Pohlman**
**Patentanwälte Rechtsanwälte PartG mbB**
**Theatinerstrasse 16**
**80333 München (DE)**

(56) References cited:
WO-A1-03/064560          US-A- 3 838 188
US-A1- 2004 227 264          US-A1- 2007 092 429
US-A1- 2014 065 488

**Description**

**FIELD OF THE INVENTION**

The present invention relates to a process for preparing surface-modified carbonaceous particles wherein the carbonaceous particles are coated with a surface layer of amorphous carbon. It also describes the carbonaceous particles obtainable by said process. The invention also discloses the uses of said surface-modified carbonaceous particles in various applications, including as negative electrode material in lithium ion batteries, or as components in carbon brushes or polymer composite materials.

**BACKGROUND OF THE INVENTION**

Amorphous coatings of carbon at the surface of graphitic materials are desirable for technical applications utilizing the core properties of crystalline carbon but in which the particle surface with a high degree of graphitization deteriorates some of the application parameters related to the surface properties of the graphitic material. Moreover, amorphous coatings are desirable for technical applications in which the surface chemistry or morphology of the carbonaceous core deteriorates some of the application parameters related to the surface properties of the carbonaceous material. The adjustment of the carbon surface can be achieved by coating the appropriate carbon at the surface of the carbon core. Examples of technical applications utilizing graphitic carbon with a higher compatibility given by a higher degree of amorphization at the surface are manifold. Such a core-shell principle could be applied to graphite materials used as filler in thermally conductive polymers. Graphitic carbon is well-known for its ability to increase the thermal conductivity of polymers. Compared to graphite, the thermal conductivity of amorphous carbon is significantly lower. However, due to the high degree of crystallinity, the amount of surface groups being typically linked to $sp^3$-carbon at superficial defects like prismatic edges and dislocation lines is limited for graphite. This is one reason why the addition of graphite powders to polymers causes a dramatic reduction of the mechanical properties of the resulting polymer compound. The surface groups at the carbon surface may form chemical bonds to some polymer types and therefore significantly improve the mechanical properties of a polymer compound. Due to the high concentration of $sp^3$-carbon atoms, the amount of surface groups in amorphous carbons is significantly higher than for graphite materials. Polymer compounds containing graphite fillers with core/shell structure therefore show high thermal conductivity and at the same time better mechanical properties than compounds with uncoated graphite powders.

Another prominent example of the application of graphite material with core-shell structure is the use of graphite as negative electrode material in lithium-ion batteries. Lithium-ion batteries are widely used in portable consumer devices like portable computers, mobile phones, and video or photographic cameras. In addition, large-scale lithium batteries are an attractive battery technology for hybrid electric vehicles, plug-in electric vehicles, and fully electric vehicles that will have a growing future market share due to their improved fuel economy and lowered $CO_2$ gas emission. The growing importance of renewable energy production requires large energy storage systems and large-scale lithium batteries are considered as potential battery system used in smart grids to compensate peak power consumption in houses or to store the energy produced in off-grid photovoltaic systems.

Graphite is used as the electrochemically active material in the negative electrode of a lithium-ion battery. The graphite crystallinity is required to obtain high reversible specific charges (reversible electrochemical capacity) up to a theoretical value of 372 Ah/kg of graphite. The electrochemical redox process generating the energy is based on the reversible electrochemical intercalation of lithium into the graphite structure. The theoretical reversible capacity corresponds to a stoichiometry of $LiC_6$ of the stage-1 lithium-graphite intercalation compound formed in this intercalation process. During the charging process of the lithium-ion cell, lithium ions from the positive electrode containing materials such as $LiCo_xNi_yMn_zO_2$ where x+y+z=1 and having a layered structure, the $LiMn_2O_4$ with spinel structure, or $LiFePO_4$ of olivine-type migrate through the electrolyte and are intercalated in the graphite negative electrode. During the discharge process, the lithium ions are deintercalated from the graphite and inserted in the structure of the positive electrode material.

Graphite materials used as electrochemically active negative electrode material in lithium-ion batteries often have reduced surface crystallinity obtained by an amorphous carbon coating. The amorphous carbon coating reduces the BET surface area of the graphite negative electrode material thereby together with the lower reactivity of the amorphous carbon surface reduces the reactivity of the graphite surface towards the electrolyte being in contact to the electrodes. This leads to decreased specific charge losses ("irreversible electrochemical capacity") during the first lithium insertion cycle from the passivation of the graphite particles. The passivation of the graphite particles occurs by the formation of the so-called solid electrolyte interphase (SEI) layer at the graphite particle surface from electrolyte decomposition products. As a purely ion conducting layer the SEI suppresses further electrolyte decomposition. A better SEI quality leads to a better capacity retention during the subsequent charge/discharge cycles, an improved cell durability, cell safety, and reliability.

In commercial graphite negative electrode materials based on natural graphite, the platelet-like shape of graphite is rounded. The isotropic particle shape of graphitic electrode materials is required for an optimum electrode tortuosity providing high lithium ion diffusion rates at high charge/discharge currents and therefore offering a sufficiently high power density of the cell. Details about the lithium-ion battery technology and carbonaceous negative electrode materials are described in several reviews and monographs (see for example: P. Novak, D. Goers, M.E. Spahr, "Carbon Materials in Lithium-Ion Batteries", in: Carbons for Electrochemical Energy Storage and Conversion Systems, F. Béguin, E. Frackowiak (Eds.), Chapter 7, p. 263-328, CRC Press, Boca Raton Fl, USA, 2010; Lithium-Ion Batteries-Science and Technologies, M. Yoshio, R.J. Brodd, A. Kozawa (Eds.), Springer, New York, New York, 2009; Lithium Batteries-Science and Technology, G.-A. Nazri, G. Pistoia (Eds.), Kluwer Academic Publishers, Norwell, MA, USA, 2004; Carbon Anodes for Lithium-Ion Batteries, in: New Carbon Based Materials for Electrochemical Energy Storage Systems, I. Barsukov, C. S. Johnson, J. E. Doninger, W. Z. Barsukov (Eds.), Chapter 3, Springer, Dordrecht, The Netherlands, 2006).

Similarly, isotropic graphite materials are advantageous for graphite bipolar plates in PEM fuel cells. Bipolar plates in fuel cells are normally plagued by the low through-plane conductivity when flaky additives are used. A material with a higher isotropy, such as a spherical core-shell structure, improves the through-plane conductivity of the bipolar plate. The amorphous carbon coating of the graphite filler improves the compatibility to the polymer matrix. Additionally, the addition of metallic nanoparticles to the core-shell structure increases the conductivity of the bipolar plate while maintaining the corrosion resistance of the graphite core.

The combination of a spherical shape and an amorphous carbon coating in the core-shell material also has advantages for carbon brush applications. Rounded carbon particle shape is normally achieved by special mechanical treatments. The mechanical treatments abrase the edges thereby rounding the particles and as a consequence increasing the fine fraction in the particle size distribution. However, these mechanical treatments do not significantly change the anisotropic particle character, i.e. resulting particles show rounded particle contours but do not have a spherical shape. In addition, the increase in the amount of fines increases the consumption of resin which is often the most expensive component. With the highly spherical shape of the core-shell structure graphite material, there is an increase in electrical resistivity without the loss of mechanical properties of the final carbon brush and there are significantly fewer fines during production.

Additionally, the spherical shape of the core-shell material can increase the lifetime of the friction material by having a more controlled wearing of the material in comparison to flaky graphite particles. The amorphous coating in the shell may also decrease the wear and increase the lifetime of the material. For example, US 2014/065488 A1 discloses a method for the preparation of carbon-coated graphite composite particles wherein spherical natural graphite particles are dispersed in a solvent, optionally together with a carbon precursor such as sulfonated EPDM, sodium polyacrylate, polyacrylonitrile, phenolic resins and epoxy resins, and where the dispersion is subsequently spray-dried and subjected to a heating step to effect carbonization of the precursor, yielding graphite-modified composite particles.

*State of the Art in Graphite Particle Shaping and Coating*

The rounding of platelet-like graphite particles can be achieved by special mechanical treatments, typically of natural graphite, in ball mills, hammer mills, or by an autogenous grinding process. Usually, in these processes a large amount of fines or graphite dust is created that has to be separated from the rounded graphite product, causing a significant loss of graphite: typical industrial processes for the roundening of graphite particles have yields of about 30 % and therefore are not sustainable if large industrial quantities of spherically shaped graphite are demanded. In addition, the rounding of particle contours does not significantly change the anisotropic character of the particle.

The coating of the graphite particles by an amorphous carbon layer at present is achieved in the industry mostly by mixing the graphite particles with coal tar pitch either in a mixing process in which the pitch is mixed either as dry powder, molten liquid, or dissolved in an organic solvent. Subsequently the dry graphite/pitch mixture is carbonized and subsequently calcined under inert gas conditions at temperatures around 1500°C. One major problem of this coating process is the impact of coal tar pitch or other pitch types on the environment and health as some of the polyaromatic organic pitch ingredients ("PAHs") are considered highly toxic, carcinogenic, and/or mutagenic. Therefore, coal tar pitch is considered as a substance of very high concern in the European REACH regulation and requires a controlled use in existing manufacturing processes. New permissions for production processes involving coal tar pitch are usually not granted by state authorities in Europe. Newly developed production processes therefore require alternatives to the pitch coating that so far do not appear to exist. Pitch alternatives like special polymers or other solid organic substances that result in high carbon yield during carbonization are significantly more expensive, may not lead to the same quality of carbon coating, or are of environmental or health concern as well. Chemical vapor deposition (CVD) of pyrolytic carbon at the surface of graphite particles has been used, but CVD processes involving powders are *inter alia* difficult to be up-scaled to industrial quantities and therefore are very expensive.

Graphitized mesocarbon microbeads (MCMB) stands for an artificial graphitic coke with spherical particle shape. When heating coal tar pitch at about 450°C solid spherical coke particles are formed in the melt. The spherical particles are extracted, oxidized at elevated temperatures in air, carbonized and finally graphitized. The process principles for obtaining MCMBs are therefore fundamentally different to the processes starting from graphitic products as the core material.

In view of the problems and disadvantages inherent in or associated with the surface coating of graphitic or other carbonaceous particles, there is a need in the art for advantageous surface-modified carbonaceous particles coated with amorphous carbon. Accordingly, there is also a need for economically feasible, non-hazardous and reliable processes for preparing amorphous carbon-coated carbonaceous particles having the desired properties.

## SUMMARY OF THE INVENTION

The present invention provides processes and particles obtainable by said processes which are suited to overcome the problems and limitations observed in connection with the processes in the prior art. Accordingly, in one aspect, the invention relates to a process for making carbonaceous particles coated with a surface layer of amorphous carbon, characterized by dispersing the core carbon particles with the help of an amphiphilic organic compound, wherein the amphiphilic organic compound is a sulfated lignin, a lignosulfonate salt, or mixtures thereof, and wherein the carbonaceous particles and the amphiphilic organic compound are dispersed in the presence of a solvent, and subsequently spray-drying the dispersion, followed by carbonization of the dried powder. As noted, the dispersing step is carried out in the presence of a solvent, such as a polar solvent. In this process, the amphiphilic compound has a dual function, not only stabilizing the unipolar carbon particles, e.g. in the polar solvent, but also serving as a carbon source for the surface coating during the subsequent carbonization. Amphiphilic compounds are particularly suitable in the context of the present invention if the yield of the carbon formed from the amphiphilic organic compound in a subsequent carbonization process is high.

The resulting coated surface-modified carbon particles *inter alia* exhibit a reduced BET surface area compared to the untreated material, and are also generally characterized by a higher sphericity and isotropicity compared to the untreated material. In fact, the spray-drying of the carbon particle dispersion will result in quite spherically shaped particles, at least partly due to agglomerization of smaller particles, provided the starting graphite particle size is not too coarse (i.e. with a $D_{90}$ below about 25 $\mu$m). Raw carbonaceous materials with larger particle size than a $D_{90}$ of about 25 $\mu$m (up to a limit of about 100 $\mu$m) typically do not form spherical particles but will still result in particles having an amorphous carbon coating on their surface.

The process described herein can therefore be considered as a "one-step" process to produce with a high yield spherically shaped carbonaceous particles coated by amorphous carbon and characterized by a reduced BET surface area, starting from natural or synthetic graphite, exfoliated graphite, carbon black, petroleum- or coal-based coke, graphene, graphene fiber, nanotubes, fullerenes, nanographite, or combinations thereof. In addition, composites of these carbons with metals or alloys can be formed by adding these metals or alloys to the dispersion.

The sustainable nature of the process and resulting product is another advantage of the process described herein. Due to the possibility to avoid hazardous materials and to use non-hazardous solvents (such as alcohols or even water), the processes of the present invention are not only very cost-effective, but also environmentally friendly. Since the amorphous carbon coating is achieved by carbonization of the amphiphilic precursor, the resulting surface-modified carbonaceous material has no or a very low content of unwanted polycyclic aromatic hydrocarbons (PAHs, e.g., benzo[a]pyrene, benzo[e]pyrene, benzo[a]anthracene, chrysen, benzo[b]fluoranthene, benzo[j]fluoranthene, benzo[k]fluoranthene and dibenzo[a,h]anthracene). A low content of PAHs is thus generally advantageous, and may, depending on where the carbonaceous material is used, become even mandatory in the future in view of the increasingly tightened regulations with regard to cancerogenous and/or teratogenous compounds (such as PAHs) in consumer products and other materials. In fact for consumer products, the content of certain PAHs such as the ones mentioned above must not exceed 1 mg/kg or 0.5 mg/kg.

Another advantage provided by the process is, without wishing to be bound by any theory, associated with the use of a spray-drying step which ensures an increased uniformity of the carbonaceous particles compared to untreated particles.

The coated carbons and carbon composites have a high degree of isotropy and a decreased surface area. Accordingly, they can be used as negative electrode materials in lithium-ion batteries. The surface-modified particles described herein may be used in batteries (e.g., lithium-ion batteries) for electric vehicles, hybrid electric vehicles, and plug-in hybrid electric vehicles. For instance, the surface-modified particles having a graphitic core described herein may be used in lithium ion batteries that require a high cell capacity such as electric vehicles or plug-in hybrid electric vehicles. Alternatively, the surface-modified particles having a non-graphitic core described herein may be used in lithium ion batteries that require high power but may tolerate a lower cell capacity, such as but not limited to hybrid electric vehicles. They also can be applied as fillers in electrically and thermally conductive polymers, exhibiting improved compatibility with most polymers thereby yielding polymer composite materials or compounds having improved mechanical properties compared to standard (untreated) materials. The surface-modified particles described herein can also be used advantageously as fill material in carbon brushes, friction materials, and plastic bipolar plates. Furthermore, the surface-modified particles described herein can be used in ceramic precursor or green materials as a pore former in ceramic pieces, such as diesel particulate fillers.

## BRIEF DESCRIPTION OF THE FIGURES

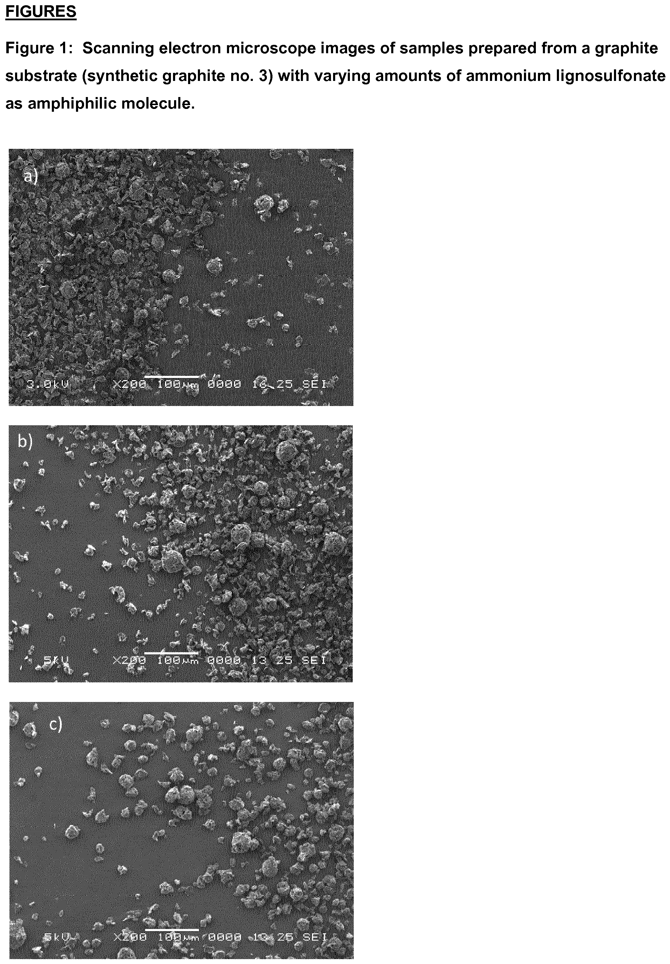

Figure 1 shows scanning electron microscope (SEM) images of samples prepared from a synthetic graphite substrate (synthetic graphite no. 3) and a) 5%; b) 10%; and c) 15% by weight of an ammonium lignosulfonate salt (Arbo T11N5), spray dried and calcined at 1050°C for 3 hours.

Figure 2 illustrates how the amphiphilic carbon precursor (shown in Fig. 2 a)) coats the hydrophobic carbon substrate while interacting with the hydrophilic solvent in the dispersion, as illustrated in Fig. 2 b).

Figure 3 shows a diagram wherein the sphericity of various samples is plotted against the particle size distribution, more specifically against the cumulative volume distribution (Q3) in percent.

## DETAILED DESCRIPTION OF THE INVENTION

The relevant disclosures in the prior art documents mentioned herein are hereby incorporated by reference in their entirety. All terms used in the present application shall have the meaning usually employed by a relevant person skilled in the art.

**Processes for preparing surface-modified carbonaceous particles coated with amorphous carbon**

In one aspect, the present invention relates to a process for preparing surface-modified carbonaceous particles wherein said carbonaceous particles are coated with a surface layer of amorphous carbon, comprising dispersing carbonaceous particles together with an amphiphilic organic compound, wherein the amphiphilic organic compound is a sulfated lignin, a lignosulfonate salt, or mixtures thereof, and wherein the carbonaceous particles and the amphiphilic organic compound are dispersed in the presence of a solvent, followed by spray-drying of the dispersion, and subsequent carbonization of the spray-dried particles comprising the amphiphilic organic compound on the surface of said particles.

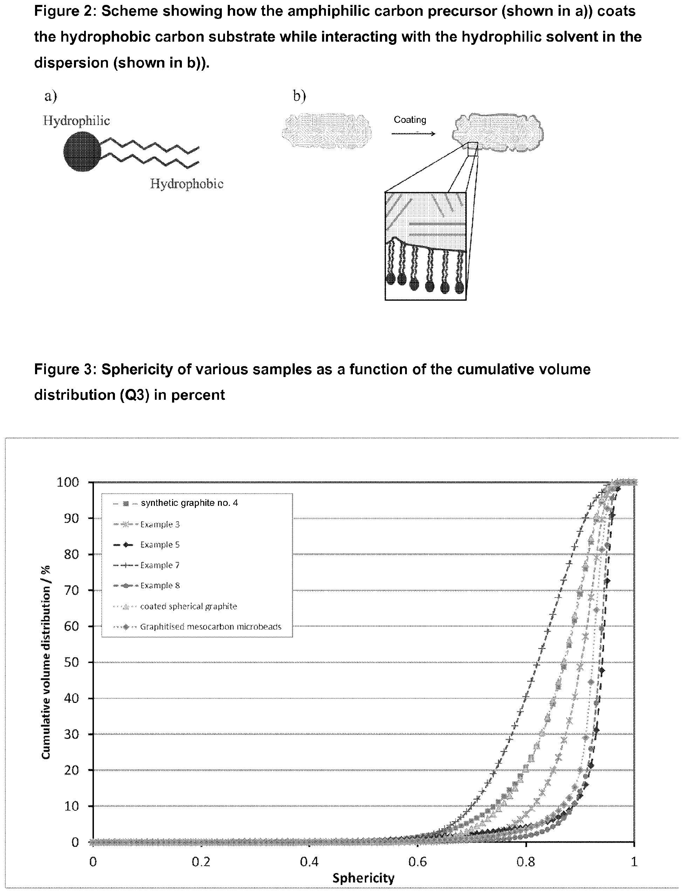

Due to the amphiphilic nature of the organic compounds, thereby leading to carbonaceous particles exhibiting a rather polar, hydrophilic surface (cf. Fig. 2b), the solvent in certain embodiments is a polar solvent. Many environmentally friendly polar solvents are known to those skilled in the art. For example, the solvent can be selected from water, methanol, ethanol, propanol, isopropanol, acetone or mixtures thereof. In view of its environmental advantages, water is in some embodiments used as a solvent for the dispersion of the carbonaceous particles. Ideally, the water employed as a solvent is deionized water to avoid the deposition of unwanted salts, ions, etc. on the surface of the particles.

Carbonaceous particles to be modified generally include graphitic and non-graphitic carbon particles, such as natural or synthetic graphite, exfoliated graphite, carbon black, petroleum- or coal-based coke, hard carbon, glassy carbon, graphene, few-layer graphene, graphite fibers; nanotubes, including carbon nanotubes, where the nanotubes are single-walled nanotubes (SWNT), multiwalled nanotubes (MWNT), or combinations of these; fullerenes, nanographite, or combinations thereof. In some embodiments, also mixtures together with non-carbonaceous particles (e.g., metal or metal oxide particles) can be used as a starting material for the process of the present invention.

Graphitic particles include natural and synthetic graphite powders, exfoliated graphite, graphene (including few-layer graphene), graphite fibers or nanographite. Non-graphitic particles that may be used as the core particles in the coating process of the present invention include fine soft and hard carbon powders like carbon black, petrol cokes, anthracites or glassy carbon, nanotubes (including carbon nanotubes), fullerenes, or mixtures thereof. In the latter case, the coating serves to lower the surface area and to optimize the carbon surface morphology of the non-graphitic carbon particles.

In certain embodiments, the carbonaceous particles to be modified have a non-spherical morphology, particular in the context of graphitic particles. In some embodiments, at least 10%, at least 20%, at least 30%, at least 40%, at least 50%, at least 60%, at least 70% or at least 80 % of the particles representing the starting material have an aspect ratio of equal or less than 0.8. Alternatively or additionally, the non-spherical nature of graphitic particles can in these embodiments also be characterized by the ratio of the intensity of the [004] versus the [110] peaks by X-ray diffraction (for details regarding the determination see method section below). Thus, in certain embodiments, the carbonaceous starting material is a graphitic material characterized by a ratio of the peak areas of the [004] and [110] reflections (peak area% [004]/[110]) of higher than 3, higher than 4, higher than 5, higher than 6, higher than 7, higher than 8, higher than 9 or higher than 10. In any event, the peak area% [004]/[110] ratio of the starting (i.e. unmodified) particles will typically be higher than that observed for the particles obtained by the processes of the invention, particularly for particles with a $D_{90}$ of below about <25 $\mu$m.

In some embodiments of this aspect of the invention, the carbonaceous starting material used as a starting material in the process has, with the possible exception of a standard milling step, e.g. to achieve a desired PSD or higher particle size uniformity, not undergone any treatment (e.g. other surface modification steps) prior to preparing the dispersion with the amphiphilic organic compound.

With regard to the particle size of the starting material, the process is generally not limited to any size. However, it is noted that carbonaceous particles with a size above 100 $\mu$m are at any rate not useful in many applications. Hence, it is preferred in this aspect of the invention that the particle size distribution (PSD) of said untreated particles is characterized by a $D_{90}$ of < 90 $\mu$m and/or a $D_{50}$ of < 50 $\mu$m, although in some applications a PSD with a $D_{90}$ of < 25 $\mu$m is preferred. In certain embodiments, the PSD of the untreated carbonaceous particles is characterized by a $D_{90}$ of < 50 $\mu$m, < 40 $\mu$m, < 30 $\mu$m, < 25 $\mu$m, or even < 20 $\mu$m, and/or a $D_{50}$ of < 25 $\mu$m, < 20 $\mu$m, <15 $\mu$m, or even <10 $\mu$m.

In some embodiments of this aspect of the present invention, the amphiphilic organic compound is added at a ratio of equal or less than 1:3 (w/w), or at a ratio of equal or less than 1:4 (w/w), or at a ratio of equal or less than 1:5 (w/w), or at a ratio of equal or less than 1:6 (w/w), with respect to the carbonaceous particles to be coated (i.e., for example, 1 kg of the amphiphilic compound and 3 kg of graphite powder would represent a ratio of 1:3 (w/w), as referred to above).

The amphiphilic organic compound serves to stabilize the graphite particles, particularly when present in the polar or aqueous solvent medium. Amphiphilic organic compounds are molecules with a nonpolar entity that have a high affinity to graphite and a polar entity with a high affinity to water or another polar solvent (see Fig. 2 a)). In the dispersion, the amphiphilic molecules and the carbonaceous particles together form a self-assembled arrangement wherein the carbonaceous particles are coated by the amphiphilic molecules such that the nonpolar entities of these molecules are attached to the surface of the graphite particles while the polar entities form at the outside of the arrangement a polar surface in contact with the solvent or water molecules (shown schematically in Fig. 2 b)). This procedure stabilizes the dispersion of the graphite particles in polar solvents such as water.

The amphiphilic compound used in this process should have a high carbon yield when thermally decomposed at high temperatures in an inert gas atmosphere (carbonization).

The inventors have found that excellent results can be achieved by using sulfated lignins or lignosulfonate salts, and mixtures thereof as the amphiphilic compound in the processes of the invention. They are high-molecular polyalkylphenyl sulfonates typically generated as by-products of paper production from wood. The lignosulfonate salts useful in the processes of the invention can have a variety of counter ions (ammonium, calcium, sodium, etc.).

In some embodiments, the amphiphilic compound represents the only source for the amorphous carbon coating of the carbonaceous particles. In other embodiments of this aspect of the present invention, additional organic additives, optionally with high carbon yield, may be added to the dispersion to influence the coating quality, thickness and resulting particle morphology. These additives should be either solvent-soluble or colloidally dispersed in the liquid medium. Suitable additives may include, but are not limited to furfuryl alcohol, furfural, polyvinyl alcohol, formaldehyde phenol resins, formaldehyde tetrahydrofuran resins, sucrose, glucose, or other sugars, polyethylether ketone, ethylene glycol, polyphenylene sulfide, polyvinyl chloride, polystyrene, pyromellitic acid, citric acid, polyaniline, styrene, tannic acid, acetic acid, cinnamaldehyde, p-toluenesulfonic acid, or synthetic latex based on styrene butyl rubber, nitrile butyl rubber, polystyrene acryl rubber, or other suitable carbon-based additives. Other preferred additives are selected from the group consisting of sugars such as sucrose, glucose, or other sugars, and organic acids such as citric acid, acetic acid, formic acid, tannic acid, or malic acid. As described in the working examples, excellent results have *inter alia* been obtained with sucrose, glucose, and citric acid as additional additive in the processes of the invention.

The process of the present invention also allows a homogeneous mixing of a metal / metalloid or alloy component, which in some embodiments is ideally attached at the surface of the carbon core by incorporating it in the carbon coating. Accordingly, in certain embodiments of this aspect of the present invention, carbon black, colloidal graphite, carbon nanotubes, or at least one fine metal/metalloid powder such as silicon, aluminum, tin, silver, copper, nickel, antimony, germanium; metal / metalloid oxides such as $TiO_2$, lithium titanate, $SiO_x$, or $SnO_x$; chalcogenides; or metal alloy powder is added to the dispersion. In some embodiments, said metal/metalloid is selected from silicon, aluminum, tin, or from alloys comprising said metals. As a result of the homogeneous mixing process, several of the mentioned carbon and metal/metalloid-based components can be combined in the amorphous carbon coating.

In lithium-ion batteries metals/metalloids like silicon, aluminum, or tin or derived metal alloys are able to insert lithium electrochemically with high reversible electrochemical capacities. These metals or metalloids may thus be optionally added to the dispersion in order to increase the electrochemical reversible capacity of the composite particles above the theoretical capacity of the graphite.

Other additives may be added to the dispersion to stabilize it or to influence the spray-drying and particle formation process. Such additives include for example rheological thickeners like starch, carboxy methyl cellulose, methyl cellulose, polyacrylates, and polyurethanes which additionally stabilize the dispersion and suppress fast sedimentation of the particles, thereby optimizing the spray-drying process. Yet other possible additives include ammonia, maltodextrin, gum arabic, gelatins, polystyrene latex, polyvinyl pyrrolidone, polylactic acid, stearic acid, or combinations thereof.

The dispersion made during the process described herein is dried by spray-drying. Adjusting the spray-drying conditions allows varying the particle size of the final particles prior to calcination. In this regard, the spray formation and consequent contact of the droplets with the hot air in the chamber are its main characteristics. It was found that the size of the droplets created during the atomization step as well as the solvent evaporation rate correlate strongly with the particle size of the final product. The hot air flow is typically co-current which ensures that the spray evaporation is rapid and the dried product does not experience any significant heat degradation. Once the solvent fully evaporates from the droplets, the dried product is entrained in the hot air flow from which it can be separated, for example by a cyclone. The process parameters such as inlet temperature, outlet temperature, pump speed, and gas flow for atomization, of the spray dryer can be optimized individually, depending on the desired characteristics of the particles, as is well-known to those of skill in the art.

Carbonization (also referred to herein as "calcination") of the spray-dried particles is then achieved by thermal decomposition of the amphiphilic compound and, optionally the additives. The carbonization step (which at higher temperatures may include graphitization processes) is generally performed under vacuum, or in an inert gas atmosphere (e.g. nitrogen, or argon) at temperatures of up to 3000°C. In preferred embodiments of this aspect of the invention, the carbonization is carried out under a nitrogen or argon atmosphere, at temperatures generally ranging from 600°C to 3000°C, or from 800°C to 3000°C, or from 1000°C to 2000°C, or from 1000°C to 1800°C, or from 1000°C to 1500°C, or from 1000 °C to 1400 °C.

In some embodiments of this aspect of the present invention, prior to the carbonization step the spray-dried particles may be subjected to a pre-treatment, either oxidative or non-oxidative, in order to adjust the desired final surface morphology. This optional pre-treatment step is typically performed under vacuum, or in an air, nitrogen, argon or $CO_2$ atmosphere at temperatures of up to 700°C. In some embodiments, the pre-treatment is carried out under a nitrogen atmosphere, and the temperature is below 700°C, or below 500°C or even below 300°C.

In some embodiments of this aspect of the present invention, the carbonized particles may also be subjected to an additional heat treatment in a gas atmosphere such as nitrogen, argon, mixtures of nitrogen with hydrocarbons like acetylene, propane or methane, or with oxidative gases such as air, steam, or $CO_2$ to adjust the morphology and surface chemistry of the amorphous carbon-coated carbonaceous particles. The optional heat treatment of the carbonized particles is typically carried out at a temperature ranging from 800 °C to 1600 °C. Non-graphitizable (hard carbon) coatings as well as soft carbon coatings may even be treated at higher temperatures up to 3000°C in an inert gas atmosphere.

The resulting carbon particle composites are typically spherically or blocky shaped and show a reduced surface area compared to the starting core carbon particles.

Given that the coating with amorphous carbon generally leads to a reduction of the BET specific surface area (BET SSA), another aspect of the present invention relates to a process for reducing the BET specific surface area of carbonaceous particles, characterized in that said carbonaceous particles are subjected to the process as described herein above.

The resulting surface-modified carbonaceous powders coated with amorphous carbon have superior properties compared to uncoated particles. For example, they lend high thermal conductivity to polymer compounds while maintaining better mechanical stability than the pristine (i.e. unmodified) carbon powders. When used as negative electrode material in lithium-ion batteries, the coated graphite powders described herein show high reversible capacity with reduced irreversible capacities in the first electrochemical reduction, and also high cycling stability. The reversible capacity can be further improved above the theoretical reversible capacity of graphite by including metal powders or alloys that form lithium alloys when inserting lithium electrochemically. Exemplary metals are, e.g., silicon or tin powders. Overall, with regard to the performance characteristics of the resulting surface-modified carbonaceous particles when employed in lithium ion batteries, the inventors have found that the material is characterized by, *inter alia,* a high lithium acceptance, increased power and electrochemical capacity.

**Surface-modified carbonaceous particles coated with amorphous carbon**

Another disclosure of the present invention relates to surface-modified carbonaceous particles coated with amorphous carbon which can for example be obtained by the processes of the present invention. These surface-modified carbonaceous particles are typically characterized by a BET SSA of below 12 $m^2$/g, or below 9 $m^2$/g, or below 6 $m^2$/g, or below 3 $m^2$/g, and in some cases even below 2 $m^2$/g, although it will be apparent to those of skill in the art that the BET SSA of the particles is somewhat dependent on the BET SSA of the uncoated core particles (with smaller particles generally having a higher BET SSA). In any event, the coating typically reduces the BET SSA to lower values compared to the untreated materials.

The surface-modified carbonaceous particles of the present invention may be further characterized in that the core particles exhibit an aspect ratio of less than 0.8. Alternatively or in addition, the surface-modified carbonaceous particles may be characterized in that at least 10%, at least 20%, at least 30%, at least 40%, at least 50%, at least 60%, at least 70% or at least 80 % of the particles forming the core of the surface-modified carbonaceous particles exhibit an aspect ratio of equal or less than 0.8.

In some instances, the surface-modified carbonaceous particles are further characterized by a xylene density of below about 2.22 $g/cm^3$, or below about 2.21 $g/cm^3$, or below about 2.20 $g/cm^3$, although the xylene density may sometimes even be below 2.18 $g/cm^3$ or 2.15 $g/cm^3$, which differs from conventional (uncoated) graphitic carbons that typically have a xylene density of between 2.25-2.26 $g/cm^3$.

The surface-modified carbonaceous particles described herein may be broadly divided into two groups:

a) wherein the core of the particles coated with amorphous carbon is made of graphitic carbon ("graphite") such as natural or synthetic graphite, exfoliated graphite, graphene (including few-layer graphene), graphite fibers, nanographite, or combinations thereof; and

b) wherein the core of the particles coated with amorphous carbon is made from non-graphitic carbon, such as anthracites, cokes, carbon black, glassy carbon, nanotubes, including carbon nanotubes, where the nanotubes are single-walled nanotubes (SWNT), multiwalled nanotubes (MWNT), or combinations of these; fullerenes, or mixtures thereof.

In some instances, also mixtures together with non-carbonaceous particles (e.g., metal / metalloid or metal / metalloid oxide particles) can be used as a starting material for the process of the present invention.

Thus, in some instances, the core of the particles coated with amorphous carbon is made of graphitic carbon characterized by an interlayer distance c/2 of 0.337 nm or less (also referred to herein as "surface-modified graphitic particles").

These surface-modified graphitic particles are in some instancescharacterized by a ratio of the peak areas of the [004] and [110] reflections (peak area % [004]/[110]) being lower than 3.6, or lower than 3.0, or lower than 2.0. The small values for the [004]/[110] ratio of the peak areas reflect the isotropic distribution of the crystalline domains within the particle. The theoretical [004]/[110] ratio for a fully isotropic distribution of the crystalline domains would be 1.56.

In some instances, the surface-modified graphitic particles are further characterized by a porosity determined by mercury intrusion porosimetry of at least about 70%, or at least about 72% or 74%.

The surface-modified graphitic particles are in some instances further characterized by a mass loss of pyrolated carbon in a pure oxygen atmosphere determined by TGA of at least 4%, or at least 5% by weight. It will be understood that the mass loss of pyrolated carbon generally depends on the thickness of the coating which in turn depends on the process parameters as well as on the amount and carbon yield of the carbon source for the coating. In any event, preferably the coating will have a thickness giving a mass loss of between 4 and 35%, or between 5 and 25%, or between 5 and 20%.

The surface-modified graphitic particles are in certain instancesfurther characterized by a PSD with the following characteristics:

a) a $D_{90}$ value ranging from 15 to 45 $\mu$m, or from 20 to 40 $\mu$m; and/or

b) a $D_{50}$ value ranging from 10 to 25 $\mu$m, or from 15 to 20 $\mu$m, and/or

c) a $D_{10}$ value ranging from 5 to 15 $\mu$m, or from 6 to 12 $\mu$m.

The inventors have found that the surface-modified graphitic particles are in some instancesfurther characterized by a $k_{AR,\rho}$ value of about < 1250, < 1200, or < 1000, while in other embodiments they are further characterized by a $k_{AR,\rho}$ value of about < 900, or < 800, or < 700, or < 600, or < 500, wherein $k_{AR,\rho}$ is defined as the ratio of the percentage of particles (by cumulative volume) having an aspect ratio (AR) of 0.8 or less ($Q3^{(AR=08)}$) and the xylene density loss delta between "ideal" graphite (having a density of 2.26 $g/cm^3$) and the determined xylene density of the coated particles:

$$k_{AR,\rho} = Q3\ (AR=0.8)/(2.26\text{-xylene density})$$

The aspect ratio AR is the ratio of the minimum to maximum Feret diameters determined by the slide gauge principle. The minimum and maximum Feret diameters are determined for each individual particle and the cumulative distribution of the aspect ratio is used to determine the Q3 (for details, see the Materials and Methods section below).

The surface-modified graphitic particles can in some instancesbe further characterized by a $k_{s,p}$ value of < 400, wherein $k_{s,p}$ is defined as the ratio of the percentage of particles (by cumulative volume) having a sphericity of 0.8 or less ($Q3^{(S=08)}$) and the xylene density loss delta between "ideal" graphite (having a density of 2.26 $g/cm^3$) and the determined xylene density of the coated particles:

$$k_{S,\rho} = Q3^{(S=0.8)}/(2.26 - \text{xylene density}),$$

The sphericity is obtained as the ratio of the perimeter of the equivalent circle to the actual perimeter (for details, see the Materials and Methods section below).

Other disclosures of the present invention relate to surface-modified carbonaceous particles coated with amorphous carbon wherein the particles comprise a non-graphitic core, formed for example by anthracites, cokes (such as petrol coke or acetylene coke), carbon black, carbon nanotubes, fullerenes or mixtures thereof. The cores of such non-graphitic cores are *inter alia* characterized by an interlayer distance $c/2$ of 0.340 nm or more.

In some instances, the carbonaceous particles having a non-graphitic core are characterized by a crystallite size $L_c$ of less than 10 nm, or of less than 7nm. They can be further characterized by a BET surface area of less than 7 $m^2$/g, or of less than 5 $m^2$/g.

The surface-modified carbonaceous particles having a non-graphitic core are in certain instances further characterized by a porosity (determined by mercury intrusion porosimetry) ranging from about 55% to about 80%, or from about 55% to about 75%, or from 60% to 75%.

The inventors have also found that the carbonaceous particles having a non-graphitic core can in certain instancesbe further characterized by a $k_{AR,\rho}$ value of < 800, wherein $k_{AR,\rho}$ is defined as the ratio of the percentage of particles (by cumulative volume) having an aspect ratio (AR) of 0.8 or less ($Q3^{(AR=0.8)}$) and the xylene density loss delta between an average uncoated coke particle (having a density of 2.1 $g/cm^3$) and the determined xylene density of the coated particles:

$$k_{AR,\rho} = Q3\,(AR=0.8)/(2.1 - \text{xylene density})$$

The aspect ratio AR is the ratio of the minimum to maximum Feret diameters determined by the slide gauge principle as described above (for details, see the Materials and Methods section below).

The inventors have further found that the carbonaceous particles having a non-graphitic core can in certain instancesbe further characterized by a $k_{s,\rho}$ value of < 70, wherein $k_{s,\rho}$ is defined as the ratio of the percentage of particles (by cumulative volume) having a sphericity of 0.8 or less ($Q3^{(S=0.8)}$) and the xylene density loss delta between an average uncoated coke particle (having a density of 2.1 $g/cm^3$) and the determined xylene density of the coated particles:

$$k_{S,\rho} = Q3^{(S=0.8)}/(2.1 - \text{xylene density}),$$

where $Q3^{(S=0.8)}$ is the percentage of particles (by cumulative volume) having a sphericity of 0.8 or less. The sphericity is obtained as the ratio of the perimeter of the equivalent circle to the actual perimeter (for details, see again the Materials and Methods section below).

In some cases, the carbonaceous core of the surface-modified carbonaceous particles is formed by a multiplicity of agglomerated smaller particles, regardless of whether the core is formed by graphitic or non-graphitic particles. Agglomeration of the core particles is typically observed for smaller core particles, such as particles having a $D_{50}$ of < about 25 $\mu$m.

Accordingly, in some cases, the starting core particles to be coated are characterized by a PSD having lower $D_{50}$ and/or $D_{90}$ values. For example, in some embodiments, the starting material is characterized by a PSD having a $D_{50}$ of less than about 15 $\mu$m and/or a $D_{90}$ of less than about 25 $\mu$m.

The surface-modified carbonaceous particles may in certain instancesfurther comprise an additive selected from the group consisting of carbon black, colloidal graphite, carbon nanotubes, metals/metalloids such as silicon, aluminum, tin, silver, copper, nickel, antimony, germanium; metal / metalloid oxides such as $TiO_2$, lithium titanate, $SiO_x$, or $SnO_x$; chalcogenides; or metal / metalloid alloys. In some cases, said metal/metalloid is selected from silicon, aluminum, tin, or from alloys comprising said metals.

As explained in more detail below, TGA analysis shows that the pyrolated carbon on the surface burns off earlier compared to particles wherein no pyrolated carbon is present on the surface of the particles. Accordingly, pyrolated (i.e. coated) carbon particles can therefore be distinguished from the respective non-pyrolated carbon particles.

In some cases, the surface-modified carbonaceous particles further comprise one or even more than one additional coatings or layers on the core. These additional layers can be either directly on the surface (i.e. below the layer of amorphous carbon), or on top of the amorphous carbon layer.

In othercases, the surface-modified carbonaceous particles consist essentially of graphite core particles and amorphous carbon. In yet other cases, the surface-modified carbonaceous particles consist essentially of non-graphite core particles (wherein the core particles are, e.g., anthracites, cokes, carbon black, nanotubes, fullerenes, etc., or mixtures thereof), and amorphous carbon.

The surface modification of the carbonaceous particles described herein in some cases consists essentially of, or consists of amorphous carbon. In some instances, the amorphous carbon coating is produced exclusively by carbonization of an amphiphilic compound on the surface of the carbonaceous core, as opposed to a coating obtained from, e.g. CVD or (coal tar) pitch.

Another characteristic of the process described herein is the low content of polycyclic aromatic hydrocarbons (PAHs) in the resulting surface modified carbonaceous particles of the present invention. Thus, in some cases, the surface modified carbonaceous particles of the present invention can be further characterized by a polycyclic aromatic hydrocarbon (PAH) concentration of less than 200 mg/kg, or less than 150 mg/kg, less than 30 mg/kg, or even less than 10 mg/kg. In some cases, the PAH content is even less than 5 mg/kg, less than 2 mg/kg, less than 1 mg/kg, or even less than 0.5 mg/kg.

It has been shown that the advantageous surface modified carbonaceous particles coated with amorphous carbon can be conveniently obtained by the process as described herein. Accordingly, a further disclosure therefore relates to surface-modified carbonaceous particles coated with amorphous carbon obtainable by a process according to the present invention, as described in detail herein above. The carbonaceous particles obtainable from the process of the invention are in some instances characterized by the parameters as set out herein above.

Another disclosure relates to compositions comprising the surface-modified carbonaceous particles as described herein. In some cases, the composition comprises mixtures of surface-modified carbonaceous particles as described herein, wherein the particles are different from each other. The compositions may in other cases furthermore, or alternatively, comprise other unmodified (e.g. natural or synthetic graphite) or modified carbonaceous, e.g. graphitic or non-graphitic particles. Thus, in other words compositions of the surface-modified carbonaceous particles described herein with other carbonaceous or non-carbonaceous materials, in various ratios (e.g. from 1:99 % to 99:1 %) are also disclosed. In certain instances, unmodified graphite may be added to the surface-modified carbonaceous particles at various stages of making the products described herein. In other instances, CVD coated or functionalized (e.g., oxidized) carbonaceous particles may be added to the surface-modified carbonaceous particles at various stages of making the products described herein.

Yet another disclosure relates to the use of the surface-modified carbonaceous particles according to the present invention for preparing a negative electrode material for lithium ion batteries. Another, related disclosure relates thus to a negative electrode of a lithium ion battery and / or to a lithium ion battery comprising the surface-modified carbonaceous particles according to the present invention as an active material in the negative electrode of the battery. For instance, a composition comprising a binder and the surface-modified carbonaceous particles could be made into an electrode.

In yet another disclosure, the present invention describes an energy storage device comprising the surface-modified carbonaceous particles as described herein.

A further disclosure of the present invention relates to a carbon brush comprising the surface-modified carbonaceous particles as described herein.

Polymer composite materials comprising the surface-modified carbonaceous particles as described hereinrepresent another disclosure of the present invention.

An electric vehicle, hybrid electric vehicle, or plug-in hybrid electric vehicle which comprises a lithium ion battery, wherein the lithium ion battery comprises the surface-modified carbonaceous particles as defined herein as an active material in the negative electrode of the battery is another disclosure of the present invention. In some cases, the carbonaceous particles comprise graphitic material, while in other materials the carbonaceous particles comprise non-graphitic material.

Finally, a ceramic, ceramic precursor material, or a green material comprising the surface-modified carbonaceous particles as defined herein as a pore forming material are another disclosure mentioned herein.

**Materials and Methods**

Specific BET Surface Area

The method is based on the registration of the absorption isotherm of liquid nitrogen in the range $p/p_0$=0.04-0.26, at 77 K. Following the procedure proposed by Brunauer, Emmet and Teller (Adsorption of Gases in Multimolecular Layers, J. Am. Chem. Soc., 1938, 60, 309-319), the monolayer adsorption capacity can be determined. On the basis of the cross-sectional area of the nitrogen molecule, the monolayer capacity and the weight of sample, the specific surface area can then be calculated.

X-Ray Diffraction

XRD data were collected using a PANalytical X'Pert PRO diffractometer coupled with a PANalytical X'Celerator detector. The diffractometer has following characteristics shown in Table 1:

**Table 1: Instrument data and measurement parameters**

| Instrument | PANalytical X'Pert PRO |
|---|---|
| X-ray detector | PANalytical X'Celerator |
| X-ray source | Cu-K$_\alpha$ |
| Generator parameters | 45 kV - 40 mA |
| Scan speed | 0.07°/s (for L$_c$ and c/2) |
|  | 0.01°/s (for [004]/[110] ratio) |
| Divergence slit | 1° (for L$_c$ and c/2) |
|  | 2° (for [004]/[110] ratio) |
| Sample spinning | 60 rpm |

The data were analyzed using the PANalytical X'Pert HighScore Plus software.

Interlayer Spacing c/2

The interlayer space c/2 is determined by X-ray diffractometry. The angular position of the peak maximum of the [002] and [004] reflection profiles are determined and, by applying the Bragg equation, the interlayer spacing is calculated (Klug and Alexander, X-ray diffraction Procedures, John Wiley & Sons Inc., New York, London (1967)). To avoid problems due to the low absorption coefficient of carbon, the instrument alignment and non-planarity of the sample, an internal standard, silicon powder, is added to the sample and the graphite peak position is recalculated on the basis of the position of the silicon peak. The graphite sample is mixed with the silicon standard powder by adding a mixture of polyglycol and ethanol. The obtained slurry is subsequently applied on a glass plate by meaning of a blade with 150 $\mu$m spacing and dried.

Crystallite Size L$_c$

Crystallite size is determined by analysis of the [002] and [004] diffraction profiles and determining the widths of the peak profiles at the half maximum. The broadening of the peak should be affected by crystallite size as proposed by Scherrer (P. Scherrer, Göttinger Nachrichten 2, 98 (1918)). However, the broadening is also affected by other factors such X-ray absorption, Lorentz polarization and the atomic scattering factor. Several methods have been proposed to take into account these effects by using an internal silicon standard and applying a correction function to the Scherrer equation. For the present invention, the method suggested by Iwashita (N. Iwashita, C. Rae Park, H. Fujimoto, M. Shiraishi and M. Inagaki, Carbon 42, 701-714 (2004)) was used. The sample preparation was the same as for the c/2 determination described above.

/ [110] ratio

The isotropicity of the crystallites is determined by the ratio of the intensity and/or by the ratio of the area between the [004] and the [110] XRD peaks. The intensity and the area of the peaks are determined after applying a peak fitting program using the PANalytical X'Pert HighScore Plus software. The samples are prepared as a slurry on a glass plate which is then dried. During the blading of the slurry on the plate, an alignment of flaky particles occurs. Through this blading procedure, a preferred orientation of anisotropic particles like graphite is introduced.

Due to the anisotropicity of the particles, the [004]/[110] ratio of the peak areas is very high (i.e. in a preferred orientation). On the contrary, for spherical particles (or agglomerates), there is no such alignment of the particles during the blading of the slurry and the resulting [004]/[110] ratio is low indicating higher isotropicity.

Particle Size Distribution by Laser Diffraction

The presence of particles within a coherent light beam causes diffraction. The dimensions of the diffraction pattern are correlated with the particle size. A parallel beam from a low-power laser is irradiated on a cell which contains the sample suspended in water. The beam leaving the cell is focused by an optical system. The distribution of the light energy in the focal plane of the system is then analyzed. The electrical signals provided by the optical detectors are transformed into particle size distribution by means of a calculator. A small sample of graphite is mixed with a few drops of wetting agent and a small amount of water. The sample prepared in the described manner is introduced in the storage vessel of the apparatus and measured.

References: ISO 13320-1 / ISO 14887

Xylene Density

The analysis is based on the principle of liquid exclusion as defined in DIN 51 901. Approx. 2.5 g (accuracy 0.1 mg) of powder is weighed in a 25 ml pycnometer. Xylene is added under vacuum (20 mbar). After a few hours dwell time under normal pressure, the pycnometer is conditioned and weighed. The density represents the ratio of mass and volume. The mass is given by the weight of the sample and the volume is calculated from the difference in weight of the xylene filled pycnometer with and without sample powder.

Reference: DIN 51 901

Scott Density (Apparent Density)

The Scott density is determined by passing the dry carbon powder through the Scott volumeter according to ASTM B 329-98 (2003). The powder is collected in a 1 in 3 vessel (corresponding to 16.39 cm$^3$) and weighed to 0.1 mg accuracy. The ratio of weight and volume corresponds to the Scott density. It is necessary to measure three times and calculate the average value. The bulk density of graphite is calculated from the weight of a 250 ml sample in a calibrated glass cylinder.

Reference: ASTM B 329-98 (2003)

Mercury Intrusion Porosimetry

The method is based on the registration of the amount of mercury intrusion versus the pressure applied to a sample immersed in mercury. On the basis of the applied pressure, the surface tension of the mercury and the contact angle between the mercury and the solid surface, the pore size can then be calculated. The experiments were performed on a sample (ca. 0.1 - 0.3 g) over the pressure range of 0.5 - 4000 bar using a Micromeritics Autopore III machine. For treating the data, a contact angle of 140° and a surface tension of 485 x 10$^{-3}$ N/m were used. The porosity of a sample is determined from the following equation:

$$Porosity = \frac{Specific\ pore\ volume}{Specific\ pore\ volume + {}^{1}/_{xylene\ density}}$$

where the specific pore volume is determined as the volume of mercury intruded per gram of sample, including interparticle and intraparticle porosity. The volume of mercury which causes the initial settling of the sample due to the exerted pressure is not included.

Reference: ISO 15901-1:2005(E)

Thermogravimetric Analysis (TGA)

The determination of the percentage of mass loss of the pyrolated carbon is performed by using conventional thermogravimetric equipment (TGA). A sample of ca. 20-30 mg was used for the measurements. The atmosphere in the thermogravimetric equipment is pure oxygen with a flow rate of 10 mL/min (with initial purging of 30 mL/min) with a heating rate of 5°C/minute up to 1000°C followed by an isotherm of 2 hours. The pyrolated carbon particles burn off carbon earlier and can therefore be distinguished from the respective non-pyrolated carbon particles.

## Dynamic Image Analysis

The sphericity and the aspect-ratio of the particles of the material were obtained from an image analysis sensor, which is a combination of particle size and shape analysis. The experiments were performed using a Sympatec QICPIC sensor and a MIXCEL dispersing unit. The material was prepared as a paste with water and a surfactant (liquid detergent). The instrument uses a high speed camera (up to 500 fps) and a pulsed light source to capture clear rear-illuminated images of entrained particles. The measurement time varied between 30-60 seconds with an average of more than 500000 measured particles. Each sample was repeated three times for reproducibility measurements. The software program determines all of the parameters for the particles

## Sphericity

The sphericity, S, is the ratio of the perimeter of the equivalent circle (assuming the particles are circles with a diameter such that it has the same area of the projection area of the particle), $P_{EQPC}$, to the real perimeter, $P_{real}$. The value provided in the table, $Q_3$ (S=0.8), corresponds to the percentage of particles (by cumulative volume) which have a sphericity lower than S=0.8. Accordingly, a small percentage indicates a sample with highly spherical particles as the majority of the particles in the sample have a sphericity greater than 0.8.

Additionally, $k_{s,\rho}$ is a parameter expressing the ratio of the percentage $Q_3$ (S=0.8) versus the decrease in xylene density from the theoretical value for graphite (which is 2.26 g/cm$^3$):

$$k_{S,\rho} = Q_3 \ (S=0.8) \ / \ (2.1 - \text{xylene density})$$

For non-graphitic (coke) particles coated with amorphous carbon, $k_{s,\rho}$ is a parameter expressing the ratio of the percentage $Q_3$ (S=0.8) versus the decrease in xylene density from the value observed for average uncoated coke particles (which is 2.1 g/cm$^3$):

$$k_{S,\rho} = Q_3 \ (S=0.8) \ / \ (2.1 - \text{xylene density})$$

## Aspect-ratio

The Feret diameter, the distance between two tangents using the slide gauge principle, is determined by the software of the Dynamic Image Analysis system. The aspect-ratio is determined from the minimum and maximum Feret diameter for each individual particle. The value provided in the table, $Q_3$ (AR=0.8), corresponds to the percentage of particles (by cumulative volume) which have an aspect-ratio lower than 0.8 (AR=0.8). A small percentage indicates a sample with highly spherical particles, as the majority of the particles in the sample have an aspect-ratio greater than 0.8.

Additionally, $k_{AR,\rho}$ is a parameter expressing the ratio of the percentage $Q_3$ (AR=0.8) versus the decrease in xylene density from the theoretical value for graphite (which is 2.26 g/cm$^3$):

$$k_{AR,\rho} = Q_3 \ (AR=0.8) \ / \ (2.26 - \text{xylene density})$$

For cokes, $k_{AR,\rho}$ is a parameter expressing the ratio of the percentage $Q_3$ (AR=0.8) versus the decrease in xylene density from the value for average uncoated coke particles (which is 2.1 g/cm$^3$):

$$k_{AR,\rho} = Q_3 \ (AR=0.8) \ / \ (2.1 - \text{xylene density})$$

## PAH concentration

The concentration of polycyclic aromatic hydrocarbons PAH was determined by the Grimmer method and the analyses were performed externally by BIU-Grimmer (Germany). The Grimmer method generally used for PAH analysis is based on a stable isotope dilution methodology using GC-MS(SIM) for quantification in the sub ppb range.

Lithium-Ion Negative Electrode Half Cell Test - Standard Procedure

This test was used to quantify the reversible and irreversible capacity of the surface-modified coated carbonaceous particles.

**General half-cell parameters:**

2 Electrode coin cell design with Li metal foil as counter/reference electrode, cell assembly in an argon filled glove box (oxygen and water content < 1 ppm).

**Diameter of electrodes:**

13 mm
A calibrated spring (100 N) was used in order to have a defined force on the electrode. Tests were carried out at 25 °C.

**Dispersion formulation:**

97% graphite/coke, 1% CMC (Sodium-carboxymethylcellulose), 2% SBR (styrene butadiene rubber)

**Dispersion preparation:**

Add the carbon powder to the CMC solution (1.5% in water) and homogenize with a dissolver disk of 20 minutes at reduced pressure at 600 rpm. Add the SBR latex (46% in water) and further homogenize for 20 minutes.

**Blading height on Cu foil:**

200 $\mu$m (doctor blade).

**Drying procedure:**

Coated Cu foils were dried for 1 h at 80 °C, followed by 12 h at 120° C under vacuum (< 50 mbar). After cutting, the electrodes were dried for 10 h at 120 °C under vacuum (< 50 mbar) before insertion into the glove box.

**Electrolyte:**

Ethylenecarbonate (EC) : Ethylmethylcarbonate (EMC) 1:3, 1 M LiPF$_6$ for all examples was used.

**Separator:**

Glass fiber sheet, ca. 1 mm

**Cycling program using a potentiostat/galvanostat:**

1$^{st}$ charge: constant current step 10 mA/g to a potential of 5 mV vs. Li/Li$^+$, followed by a constant voltage step at 5 mV vs. Li/Li$^+$ until a cutoff current of 5 mA/g was reached.
1$^{st}$ discharge: constant current step 10 mA/g to a potential of 1.5 V vs. Li/Li$^+$, followed by a constant voltage step at 1.5 V vs. Li/Li$^+$ until a cutoff current of 5 mA/g was reached.
Further charge cycles: constant current step at 50 mA/g to a potential of 5 mV vs. Li/Li$^+$, followed by a constant voltage step at 5 mV vs. Li/Li$^+$ until a cutoff current of 5 mA/g was reached.
Further discharge cycles: constant current step at 1 C to a potential of 1.5 V vs. Li/Li$^+$, followed by constant voltage step at 1.5 V vs. Li/Li$^+$ until a cutoff current of 5 mA/g was reached.
Having described the various aspects of the present invention in general terms, it will be apparent to those of skill in the art that many modifications and slight variations are possible without departing from the spirit and scope of the present invention. Some embodiments will now be described by way of illustration, with reference to the following examples.

## EXAMPLES

*Example 1*

In a plastic beaker 450 g of ammonium lignosulfonate was dissolved in 9 L of deionized water by stirring for 30-40 min with a dissolver plate. To this solution, 3 kg of a synthetic graphite (synthetic graphite no. 3, properties listed in Table 2 below) was slowly added by high shear mixing using the dissolver equipped with a saw-tooth blade. The speed of the tooth-saw blade was increased as the viscosity of the mixture increases. The dispersion was constantly mixed under high shear for at least 1 h. A GEA Niro Mobile Minor spray dryer equipped with a rotary atomizer disk was used to dry the coated graphite particles. An inlet temperature of 200°C with a nominal drying gas rate of 80 kg/h in the co-current mode was used and a water evaporation rate of 2.3 kg/h was obtained. The resulting dried powder was carbonized and heat treated at 1050 °C in an inert atmosphere for 3 h with a heating rate of 4°C/minute.

*Example 2*

In a plastic beaker 30 g of ammonium lignosulfonate and 100 g of sucrose were dissolved in 600 mL of deionized water by stirring for 10-20 min in a dissolver. To this solution, 200 g of another synthetic graphite (synthetic graphite no. 2, properties listed in Table 2 below) was slowly added by high shear mixing using the dissolver equipped with a saw-tooth blade. The speed of the tooth-saw blade was increased as the viscosity of the mixture increases. The dispersion was constantly mixed under high shear for 1 h. A Buchi B-290 laboratory spray dryer was used to dry the coated graphite particles. The dispersion was atomized into the chamber via a 2-fluid nozzle in the co-current mode. An inlet temperature of 170°C with a drying gas flow rate of 35 $m^3$/h and a 30% pump speed was used and a water evaporation rate of 0.4-0.5 kg/h was obtained. The resulting dried powder was pre-treated at 180 °C in a nitrogen gas atmosphere in a tube furnace for 1 h, then slowly heated to 420 °C and subsequently carbonized at 1400 °C in an inert atmosphere and held for 2 h (heating rates of 120 and 240 °C/h, respectively).

*Example 3*

In a plastic beaker 40 g of ammonium lignosulfonate was dissolved in 900 mL of deionized water by stirring for 10-20 min in a dissolver. To this solution, 200 g of yet another synthetic graphite (synthetic graphite no. 6, properties listed in Table 2 below) synthetic graphite was slowly added by high shear mixing using the dissolver equipped with a saw-tooth blade. The speed of the tooth-saw blade was increased as the viscosity of the mixture increases. The dispersion was constantly mixed under high shear for 1 h. A Buchi B-290 laboratory spray dryer was used to dry the coated graphite particles. The dispersion was atomized into the chamber via a 2-fluid nozzle in the co-current mode. An inlet temperature of 170°C with a drying gas flow rate of 35 $m^3$/h and a 30% pump speed was used and a water evaporation rate of 0.4-0.5 kg/h was obtained. The resulting dried powder was carbonized and heat treated at 1050 °C in an inert atmosphere for 3 h with a heating rate of 4°C/minute.

*Example 4*

In a plastic beaker 30 g of ammonium lignosulfonate and 40 g of citric acid were dissolved in 600 mL of deionized water by stirring for 10-20 min in a dissolver. To this solution, 200 g of a synthetic graphite (synthetic graphite no. 3) was slowly added by high shear mixing using the dissolver equipped with a saw-tooth blade. The speed of the tooth-saw blade was increased as the viscosity of the mixture increases. The dispersion was constantly mixed under high shear for 1 h. Spray drying, carbonization, and heat treatment were performed as described in Example 3.

*Example 5*

In a plastic beaker 30 g of ammonium lignosulfonate was dissolved in 600 mL of deionized water by stirring for 10-20 min in a dissolver. To this solution 200 g of another synthetic graphite (synthetic graphite no. 1, properties listed in Table 2 below) was slowly added by high shear mixing using the dissolver equipped with a saw-tooth blade. The speed of the tooth-saw blade was increased as the viscosity of the mixture increases. The dispersion was constantly mixed under high shear for 1 h. Spray drying, carbonization, and heat treatment were performed as described in Example 3.

*Example 6*

In a plastic beaker 50 g of ammonium lignosulfonate and 100 g of sucrose were dissolved in 600 mL of deionized water by stirring for 10-20 min in a dissolver. To this solution 200 g of a synthetic graphite (synthetic graphite no. 3) was slowly added by high shear mixing using the dissolver equipped with a saw-tooth blade. The speed of the tooth-saw blade was increased as the viscosity of the mixture increases. The dispersion was constantly mixed under high shear for 1 h. Spray drying, carbonization, and heat treatment were performed as described in Example 2.

*Example 7*

In a plastic beaker 30 g of ammonium lignosulfonate was dissolved in 600 mL of deionized water by stirring for 10-20 min in a dissolver. To this solution, 200 g of a synthetic graphite (synthetic graphite no. 5, properties listed in Table 2 below) was slowly added by high shear mixing using the dissolver equipped with a saw-tooth blade. The speed of the tooth-saw blade was increased as the viscosity of the mixture increases. The dispersion was constantly mixed under high shear for 1 h. The spray drying was performed as described in Example 2. The resulting dried powder was pre-treated at 180 °C in a nitrogen gas atmosphere in a tube furnace for 1 h, then slowly heated to 420 °C and subsequently carbonized at 1050 °C in an inert atmosphere and held for 2 h (heating rates of 120 and 240 °C/h, respectively).

*Example 8*

In a plastic beaker 30 g of ammonium lignosulfonate was dissolved in 563 mL of deionized water by stirring for 10-20 min in a dissolver. To this solution 190 g of a synthetic graphite (synthetic graphite no. 4, properties listed in Table 2 below) and 50 g of a Colloidal Graphite Dispersion (LB 2053) were slowly added by high shear mixing using the dissolver equipped with a saw-tooth blade. The speed of the tooth-saw blade was increased as the viscosity of the mixture increases. The dispersion was constantly mixed under high shear for 1 h. Spray drying, carbonization, and heat treatment were performed as described in Example 3.

*Example 9*

In a plastic beaker 50 g of ammonium lignosulfonate was dissolved in 600 mL of deionized water by stirring for 10-20 min in a dissolver. To this solution 200 g of a synthetic graphite (synthetic graphite no. 3) and 10 g silicon powder (average particle size 1 $\mu$m with silicon content of between 50-100%) was slowly added by high shear mixing using the dissolver equipped with a saw-tooth blade. The speed of the tooth-saw blade was increased as the viscosity of the mixture increases. The dispersion was constantly mixed under high shear for 1 h. Spray drying, carbonization, and heat treatment were performed as described in Example 3.

*Example 10*

In a plastic beaker 60 g of ammonium lignosulfonate was dissolved in 600 mL of deionized water by stirring for 10-20 min in a dissolver. To this solution, 200 g of a petrol coke (properties listed in Table 3 below) was slowly added by high shear mixing using the dissolver equipped with a saw-tooth blade. The speed of the tooth-saw blade was increased as the viscosity of the mixture increases. The dispersion was constantly mixed under high shear for 1 h. Spray drying was performed as described in Example 2. The resulting dried powder was carbonized and heat treated at 1400°C in an inert atmosphere for 3 hours using a heating rate of 240°C/h.

*Example 11*

In a plastic beaker 30 g of ammonium lignosulfonate was dissolved in 600 mL of deionized water by stirring for 10-20 min in a dissolver. To this solution 200 g of a milled acetylene calcined coke (properties listed in Table 3 below, $D_{90}$ typically about 15-20 $\mu$m) was slowly added by high shear mixing using the dissolver equipped with a saw-tooth blade. The speed of the tooth-saw blade was increased as the viscosity of the mixture increases. The dispersion was constantly mixed under high shear for 1 h. Spray drying was performed as in Example 2. The resulting powder was carbonized and heat treated at 1800°C for 4 hours in an inert atmosphere with a heating rate of 10°C/minute.

*Example 12*

In a plastic beaker 60 g of ammonium lignosulfonate was dissolved in 600 mL of deionized water by stirring for 10-20 min in a dissolver. To this solution, 190 g of a petrol coke (properties listed in Table 3 below) and 10 g lamp black were slowly added by high shear mixing using the dissolver equipped with a saw-tooth blade. The speed of the tooth-saw blade was increased as the viscosity of the mixture increases. The dispersion was constantly mixed under high shear for 1 h. Spray drying was performed as described in Example 2. The resulting dried powder was carbonized and heat treated at 1050°C in an inert atmosphere for 3 hours using a heating rate of 240°C/h.

*Example 13*

In a plastic beaker 60 g of ammonium lignosulfonate was dissolved in 600 mL of deionized water by stirring for 10-20 min in a dissolver. To this solution, 198 g of a petrol coke (properties listed in Table 3 below) and 2 g carbon nanotubes were slowly added by high shear mixing using the dissolver equipped with a saw-tooth blade. The speed of the tooth-saw blade was increased as the viscosity of the mixture increases. The dispersion was constantly mixed under high shear for 1 h. Spray drying was performed as described in Example 2. The resulting dried powder was carbonized and heat treated at 1400°C in an inert atmosphere for 3 hours using a heating rate of 240°C/h.

*Example 14*

In a plastic beaker 60 g of ammonium lignosulfonate was dissolved in 600 mL of deionized water by stirring for 10-20 min in a dissolver. To this solution, 190 g of a petrol coke (properties listed in Table 3 below) and 10 g tin nanopowder (60-80 nm diameter) were slowly added by high shear mixing using the dissolver equipped with a saw-tooth blade. The speed of the tooth-saw blade was increased as the viscosity of the mixture increases. The dispersion was constantly mixed under high shear for 1 h. Spray drying was performed as described in Example 2. The resulting dried powder was carbonized and heat treated at 1500°C in an inert atmosphere for 3 hours using a heating rate of 240°C/h.

*Results*

Properties of Starting Graphite Materials

The properties of starting graphite materials are shown in Table 2.

**Table 2: Properties of Starting Graphite Materials**

| Starting material | Synthetic Graphite No. 1 | Synthetic Graphite No. 2 | Synthetic Graphite No. 3 | Synthetic Graphite No. 4 | Synthetic Graphite No. 5 | Synthetic Graphite No. 6 |
|---|---|---|---|---|---|---|
| Particle size $D_{10}$ ($\mu$m) $D_{5O}$ ($\mu$m) $D_{90}$ ($\mu$m) | 1.2 2.4 4.7 | 1.6 3.4 6.5 | 3.1 8.0 17.2 | 3.2 10.0 24.2 | 5.1 17.9 35.8 | 3.7 8.8 17.9 |
| BET SSA ($m^2$ $g^{-1}$) | 26 | 20 | 12 | 12 | 8.5 | 9.5 |
| Xylene density (g $cm^{-3}$) | 2.255 | 2.255 | 2.255 | 2.255 | 2.252 | 2.260 |
| Scott density (g $cm^{-3}$) | 0.07 | 0.07 | 0.1 | 0.14 | 0.18 | 0.09 |
| Interlayer distance c/2 (nm) | 0.3357 | 0.3357 | 0.3358 | .3358 | 0.3358 | 0.3356 |
| Crystallite size $L_c$ (nm) | 60 | 75 | 126 | 131 | 147 | 175 |
| [004]/[110] (intensity of peaks) | 6.7 | 8.4 | 12.7 | 14.8 | 12.6 | 12.8 |
| [004]/[110] (area of peaks) | 11.0 | 13.2 | 15.8 | 19.6 | 16.6 | 17.1 |
| Porosity (%) | 60 | | 66 | 72 | 72 | 77 |

(continued)

| Starting material | Synthetic Graphite No. 1 | Synthetic Graphite No. 2 | Synthetic Graphite No. 3 | Synthetic Graphite No. 4 | Synthetic Graphite No. 5 | Synthetic Graphite No. 6 |
|---|---|---|---|---|---|---|
| Mass loss of pyrolated carbon coating (TGA result) [%] | 0.1 | 0.1 | 0.1 | 0.1 | 0.1 | 0.1 |
| Q3 (S=0.8) in [%] | 8.0 | | | 20.8 | | |
| $k_{s,p}$ = Q3 (S=0.8)/(2.26-xylene density) | 1590 | | | 4160 | | |
| Q3 (AR=0.8) in [%] | 79.5 | | | 88.5 | | |
| $k_{AR,\rho}$ = Q3 (AR=0.8)/(2.26-xylene density) | 15900 | | | 17700 | | |
| Reversible capacity at 10 mA/g (Ah kg$^{-1}$) | 361 | 358 | 364 | 364 | 355 | 366 |

Properties of Starting Coke Materials

The properties of starting coke materials are shown in Table 3.

**Table 3: Properties of Starting Coke Materials**

| Starting material | Petrol coke | Acetylene coke |
|---|---|---|
| Particle size<br>$D_{10}$ ($\mu$m)<br>$D_{50}$ ($\mu$m)<br>$D_{90}$ ($\mu$m) | 1.1<br>3.2<br>6.1 | 3.8<br>9.0<br>16.2 |
| BET SSA (m$^2$ g$^{-1}$) | 34.1 | 19 |
| Xylene density (g cm$^{-3}$) | 2.071 | 1.534 |
| Scott density (g cm$^{-3}$) | 0.151 | 0.44 |
| Interlayer distance c/2 (nm) | 0.350 | 0.356 |
| Crystallite size $L_c$ (nm) | 2.7 | 2 |
| Porosity (%) | 67 | 56 |
| Mass loss of pyrolated carbon coating (TGA result) [%] | 0.0 | -[a] |
| Q3 (S=0.8) in [%] | 4.6 | 4.5 |
| $k_{s,p}$ = Q3 (S=0.8)/(2.1-xylene density) | 160 | 8 |
| Q3 (AR=0.8) in [%] | 76.7 | 82.3 |
| $k_{AR,\rho}$ = Q3 (AR=0.8)/( 2.1-xylene density) | 2646 | 145 |
| Reversible capacity at 10 mA/g (Ah kg$^{-1}$) | 256 | 590 |

[a] Mass loss of pyrolated carbon cannot be determined from acetylene coke samples as some surface reactions in the instrument cause a slight increase in mass (ca. 1%) at temperatures up to 450°C.

Properties of Coated Materials with Graphite Core

The properties of exemplary coated materials with a graphite core according to the present invention are shown in Table 4.

**Table 4: Properties of Coated Materials with Graphite Core**

| Example | 1 | 2 | 3 | 4 | 5 | 6 | 7 | 8 | 9 |
|---|---|---|---|---|---|---|---|---|---|
| Starting material | Synth. Graph. No. 3 | Synth. Graph. No. 2 | Synth. Graph. No. 6 | Synth. Graph. No. 3 | Synth. Graph. No. 1 | Synth. Graph. No. 3 | Synth. Graph. No. 5 | Synth. Graph. No. 4 / LB2053 | Synth. Graph. No. 3/Si |
| Particle size $D_{10}$ ($\mu$m) $D_{50}$ ($\mu$m) $D_{90}$ ($\mu$m) | 8.1 21.6 40.7 | 9.2 17.5 30.8 | 9.1 19.2 24.5 | 10.9 21.4 38.3 | 6.7 16.4 32.2 | 12.7 23.9 41.1 | 7.7 19.8 41.6 | 10.3 20.7 34.9 | 7.5 16.5 31.1 |
| BET SSA ($m^2$ $g^{-1}$) | 3.7 | 3.8 | 3.6 | 5.5 | 11.3 | 1.3 | 3.4 | 5.7 | 5.0 |
| Xylene density (g $cm^{-3}$) | 2.184 | 2.069 | 2.169 | 2.181 | 2.197 | 2.044 | 2.156 | 2.147 | 2.197 |
| Scott density (g $cm^{-3}$) | 0.25 | | 0.23 | 0.18 | 0.34 | 0.36 | 0.30 | 0.35 | |
| Interlayer distance c/2 (nm) | 0.3358 | 0.3361 | 0.3357 | 0.3358 | 0.3359 | 0.3360 | 0.3358 | 0.3358 | 0.3358 |
| Crystallite size Lc (nm) | 96 | 48 | 127 | 84 | 48 | 60 | 122 | 131 | 103 |
| [004]/[110] (intensity) | 1.3 | 1.0 | 1.5 | 1.1 | 0.9 | 1.2 | 2.2 | 1.8 | 1.5 |
| [004]/[110] (area) | 2.0 | 1.5 | 2.2 | 1.8 | 1.6 | 1.7 | 3.6 | 2.9 | 2.4 |
| Porosity (%) | 76 | | 79 | 80 | 79 | 80 | 79 | 74 | 76 |
| Mass loss of pyrolated carbon coating (TGA result) [%] | 5.8 | 15.1 | 6.7 | 6.9 | 5.4 | 20.0 | 5.9 | 8.4 | 5.2 |
| Q3 (S=0.8) in [%] | 7.8 | 28.5 | 7.8 | 30.3 | 4.2 | 43.9 | 40.4 | 1.6 | 9.4 |
| $k_{s,p}$ = Q3 (S=0.8)/ (2.26-xylene density) | 102 | 150 | 89 | 383 | 69 | 203 | 388 | 23.6 | 150 |
| Q3 (AR=0.8) in [%] | 81.8 | 76.6 | 78.6 | 77.9 | 23.3 | 84.8 | 98.3 | 44.5 | 75.8 |
| $k_{AR,\rho}$ = Q3 (AR=0.8)/ (2.26-xylene density) | 1077 | 402 | 904 | 985 | 389 | 392 | 945 | 635 | 1202 |

(continued)

| Example | 1 | 2 | 3 | 4 | 5 | 6 | 7 | 8 | 9 |
|---|---|---|---|---|---|---|---|---|---|
| Starting material | Synth. Graph. No. 3 | Synth. Graph. No. 2 | Synth. Graph. No. 6 | Synth. Graph. No. 3 | Synth. Graph. No. 1 | Synth. Graph. No. 3 | Synth. Graph. No. 5 | Synth. Graph. No. 4 / LB2053 | Synth. Graph. No. 3/Si |
| Reversible capacity at 10 mA/g (Ah kg$^{-1}$) | 356 | 311 | 346 | 346 | 345 | 325 | 346 | 351 | 423 |
| Relative reduction in irrev. capacity in | 28 | 59 | 2 | 5 | 45 | (9%) | 2 | 1[*] | 21[†] |
| (%) compared with raw graphite | | | | | | | | | |
| * Relative reduction is compared to raw KS 25, there would be considerable contribution to the irreversible capacity from the microcolloidal graphite. Therefore the relative reduction should be higher than shown. <br> † Relative reduction is compared to a mixture of raw graphite and nano-silicon. | | | | | | | | | |

Properties of Coated Materials with Non-Graphitic Carbon Core

The properties of coated materials with a non-graphitic carbon core according to the present invention are shown in Table 5.

**Table 5: Properties of Coated Materials with Non-Graphitic Carbon Core**

| Example | 10 | 11 | 12 | 13 | 14 |
|---|---|---|---|---|---|
| Starting material | Petrol coke | Acetylene coke | Petrol coke/ lamp black | Petrol coke / carbon nanotubes | Petrol coke / tin nanopowder 60-80 nm |
| Particle size <br> $D_{10}$ ($\mu$m) <br> $D_{50}$ ($\mu$m) <br> $D_{90}$ ($\mu$m) | 6.7 <br> 13.2 <br> 24.9 | 6.6 <br> 13.8 <br> 26.2 | 6.0 <br> 13.8 <br> 27.4 | 11.0 <br> 24.5 <br> 44.5 | 5.7 <br> 13.7 <br> 27.9 |
| BET SSA (m$^2$ g$^{-1}$) | 5.4 | 1.6 | 14.7 | 11.7 | 9 |
| Xylene density (g cm$^{-3}$) | 2.024 | 1.96 | 2.032 | 2.089 | 2.123 |
| Scott density (g cm$^{-3}$) | 0.4 | | n.d. | n.d. | n.d. |
| Interlayer distance c/2 (nm) | 0.350 | 0.349 | 0.352 | 0.349 | 0.347 |
| Crystallite size Lc (nm) | 3.4 | 5.3 | 2.6 | 3.6 | 5.3 |
| Porosity (%) | 74 | 60 | n.d. | n.d. | n.d. |
| Mass loss of pyrolated carbon coating (TGA result) [%] | 7 | -[a] | n.d. | n.d. | n.d. |
| Q3 (S=0.8) in [%] | 4.7 | 7.4 | n.d. | n.d. | n.d. |
| $k_{s,p}$ = Q3 (S=0.8)/(2.1-xylene density) | 62 | 53 | n.d. | n.d. | n.d. |
| Q3 (AR=0.8) in [%] | 55.2 | 74.4 | n.d. | n.d. | n.d. |

(continued)

| Example | 10 | 11 | 12 | 13 | 14 |
|---|---|---|---|---|---|
| Starting material | Petrol coke | Acetylene coke | Petrol coke/ lamp black | Petrol coke / carbon nanotubes | Petrol coke / tin nanopowder 60-80 nm |
| $k_{AR,\rho}$ = Q3 (AR=0.8)/(2.1-xylene density) | 725 | 531 | n.d. | n.d. | n.d. |
| Reversible capacity at 10 mA/g (Ah kg$^{-1}$) | 240 | 162 | 254 | 233 | 227 |
| Relative reduction in irrev. capacity in (%) compared with raw graphite | 35 | 47 | 30 | 46 | 40 |
| [a] The chemical nature of the core acetylene coke particles is too similar to the amorphous carbon coating and therefore the reactivity with oxygen of the coating and the core particle cannot be distinguished. It is therefore not possible to determine the mass loss of pyrolated carbon coating. | | | | | |

It is noted that the amorphous carbon coated acetylene coke showed a slightly higher xylene density compared to the starting material. This appears to be caused by partial graphitization as the material was carbonized at 1800°C.

Properties of alternative Coated Materials (Comparative Examples)

The comparative properties of alternative coated materials known from the prior art are shown in Table 6.

**Table 6: Properties of alternative Coated Materials**

| Comparative Example | 1 | 2 | 3 | 4 |
|---|---|---|---|---|
| | Coated natural graphite | Graphitized mesocarbon | Graphitized mesocarbon microbeads | CVD coated graphite [†] |
| Particle size D10 ($\mu$m) D50 ($\mu$m) D90 ($\mu$m) | 9 18 31 | 7 14 27 | 12 23 41 | 7 16 32 |
| BET SSA (m$^2$ g$^{-1}$) | 2 | 1 | 1.8 | 3.8 |
| Xylene density (g cm$^{-3}$) | 2.244 | 2.247 | 2.233 | 2.218 |
| Scott density (g cm$^{-3}$) | 0.63 | 0.66 | 1.115 | 0.258 |
| Interlayer distance c/2 (nm) | 220 | 83 | 120 | 139 |
| Crystallite size Lc (nm) | 0.3361 | 0.3361 | 0.3359 | 0.3357 |
| [004]/[110] (intensity) | 5.8 | 1.9 | 2.7 | 9.7 |
| [004]/[110] (area) | 8.2 | 3.0 | 4.1 | 10.5 |
| Porosity (%) | 57 | 59 | 39 | 71 |
| Mass loss of pyrolated carbon coating (TGA result) [%] | 0.2 | 0.0 | 0.0 | 0.7 |
| Q3 (S=0.8) in [%] | 20.3 | 7.2 | 3.6 | 20.1 |
| $k_{s,\rho}$ = Q3 (S=0.8)/(2.26-xylene density) | 1271 | 553 | 134 | 4026 |
| Q3 (AR=0.8) in [%] | 93 | 85.6 | 83 | 89 |

(continued)

| Comparative Example | 1 | 2 | 3 | 4 |
|---|---|---|---|---|
| | Coated natural graphite | Graphitized mesocarbon | Graphitized mesocarbon microbeads | CVD coated graphite † |
| $k_{AR,\rho}$ = Q3 (AR=0.8)/(2.26-xylene density) | 5841 | 6580 | 3070 | 17700 |
| Reversible capacity at 10 mA/g (Ah kg$^{-1}$) | 353 | 326 | | 356 |
| † A laboratory chemical vapor deposition (CVD) method with acetylene was used to coat TIMREX KS 5-25 synthetic graphite at a treatment temperature of 1050°C. A mixture of acetylene gas in nitrogen (1:3 ratio) was used with a treatment time of 30 minutes. | | | | |

*References*

N. Iwashita, C. Rae Park, H. Fujimoto, M. Shiraishi and M. Inagaki, Carbon 42, 701-714 (2004)

H.P. Klug and L.E. Alexander (Eds.), "X-ray diffraction Procedures", John Wiley & Sons Inc., New York, London (1967)

G.-A. Nazri, G. Pistoia (Eds.), "Lithium Batteries-Science and Technology", Kluwer Academic Publishers, Norwell, MA, USA, 2004

P. Novak, D. Goers, M.E. Spahr, "Carbon Materials in Lithium-Ion Batteries", in: Carbons for Electrochemical Energy Storage and Conversion Systems, F. Béguin, E. Frackowiak (Eds.), Chapter 7, p. 263-328, CRC Press, Boca Raton Fl, USA, 2010

P. Scherrer, "Bestimmung der Größe und der inneren Struktur von Kolloidteilchen mittels Röntgenstrahlen.", Göttinger Nachrichten 2, 98 (1918)

M. Yoshio, R.J. Brodd, A. Kozawa (Eds.), "Lithium-Ion Batteries-Science and Technologies", Springer, New York, New York, 2009

I. Barsukov, C. S. Johnson, J. E. Doninger, W. Z. Barsukov (Eds.), "New Carbon Based Materials for Electrochemical Energy Storage Systems", Chapter 3: Carbon Anodes for Lithium-Ion Batteries, Springer, Dordrecht, The Netherlands, 2006

S. Brunauer, P. H. Emmett, E. Teller, "Adsorption of Gases in Multimolecular Layers", J. Am. Chem. Soc., 60, 309-319, (1938)

**Claims**

1. Process for preparing surface-modified carbonaceous particles wherein said carbonaceous particles are coated with a surface layer of amorphous carbon, comprising

   a. dispersing carbonaceous particles together with an amphiphilic organic compound, wherein the amphiphilic organic compound is a sulfated lignin, a lignosulfonate salt, or mixtures thereof, and wherein the carbonaceous particles and the amphiphilic organic compound are dispersed in the presence of a solvent,
   b. spray-drying the dispersion, and
   c. effecting carbonization of the spray-dried particles comprising the amphiphilic organic compound on the surface of said particles.

2. The process according to claim 1, wherein the carbonaceous particles to be surface-modified are selected from graphitic particles including natural or synthetic graphite, exfoliated graphite, graphene, few-layer graphene, graphite fibers, nanographite, or non-graphitic carbon, including carbon black, petroleum- or coal-based coke, glassy carbon, nanotubes, fullerenes, or combinations thereof, optionally together with other non-carbonaceous particles (e.g., metallic particles).

3. The process according to claim 1 or claim 2, wherein the carbonaceous particles to be surface-modified are **characterized by** a ratio of the peak areas of the [004] and [110] reflections (peak area% [004]/[110]) of higher than 3, higher than 4, higher than 5, higher than 6, higher than 7, higher than 8, higher than 9 or higher than 10.

4. The process according to any one of claims 1 to 3, wherein the solvent is a polar solvent.

5. The process according to claim 4, wherein the solvent is selected from water, methanol, ethanol, propanol, isopropanol, and acetone, optionally wherein the solvent is water.

6. The process according to any one of claims 1 to 5, wherein the amphiphilic organic compound is added in a ratio of equal or less than 1:3 (w/w) with regard to the carbonaceous particles to be coated.

7. The process according to any one of claims 1 to 6, wherein further additives are added to the dispersion, optionally wherein said additives are selected form the group consisting of
starch, carboxy methyl cellulose, methyl cellulose, polyacrylates, polyurethanes, furfuryl alcohol, furfural, polyvinyl alcohol, formaldehyde phenol resins, formaldehyde tetrahydrofuran resins, sucrose, glucose, or other sugars, polyethyl ether ketone, polyphenylene sulfide, polyvinyl chloride, polystyrene, pyromellitic acid, citric acid, polyaniline, styrene, tannic acid, synthetic latex based on styrene butyl rubber, nitrile butyl rubber, ammonia, maltodextrin, acetic acid, formic acid, gum arabic, gelatins, polystyrene latex, polyvinyl pyrrolidone, polylactic acid, malic acid, stearic acid, or polystyrene acryl rubber, and combinations thereof.

8. The process according to any one of claims 1 to 7, wherein during the dispersion step carbon black, colloidal graphite, carbon nanotubes, or at least one fine metal/metalloid such as silicon, aluminum, tin, silver, copper, nickel, antimony, germanium; metal / metalloid oxides such as $TiO_2$, lithium titanate, $SiO_x$, or $SnO_x$; chalcogenides; or metal alloy powder is added to the dispersion; optionally wherein said metal/metalloid is selected from silicon, aluminum, tin, or alloys comprising said metals.

9. The process according to any one of claims 1 to 8, wherein said carbonization is achieved by a thermal decomposition under vacuum or an inert atmosphere, optionally under a nitrogen or argon atmosphere, at temperatures ranging from 600°C to 3000°C, or between 1000°C and 1500°C.

10. The process according to any one of claims 1 to 9, wherein prior to the carbonization step the spray-dried particles are subjected to a pre-treatment performed under vacuum, air, nitrogen, argon or $CO_2$ atmosphere at temperatures of below 700°C, or below 500°C.

11. The process according to any one of claims 1 to 10, wherein the carbonized particles are subjected to an additional heat treatment in a gas atmosphere such as nitrogen, argon, mixtures of nitrogen with hydrocarbons like acetylene, propane or methane, or with oxidative gases such as air, steam, or $CO_2$ to adjust the morphology and surface chemistry of the amorphous carbon-coated carbonaceous particles, optionally wherein said heat treatment is carried out at a temperature ranging from 800°C to 1600°C.

12. The process according to any one of claims 1 to 11, wherein the particle size distribution of said particles to be coated is **characterized by** a $D_{90}$ of < 90 $\mu$m, or a $D_{90}$ of < 25 $\mu$m, and/or a $D_{50}$ of < 50 $\mu$m, or a $D_{50}$ of < 20 $\mu$m.

13. A process for reducing the BET specific surface area of carbonaceous particles, **characterized in that** said carbonaceous particles are subjected to a process of any one of claims 1 to 12.

**Patentansprüche**

1. Verfahren zum Herstellen von oberflächenmodifizierten kohlenstoffhaltigen Partikeln, wobei die kohlenstoffhaltigen Partikel mit einer Oberflächenschicht aus amorphem Kohlenstoff beschichtet sind, umfassend

a. Dispergieren kohlenstoffhaltiger Partikel zusammen mit einer amphiphilen organischen Verbindung, wobei die amphiphile organische Verbindung ein sulfatiertes Lignin, ein Lignosulfatsalz oder Gemische davon ist, und wobei die kohlenstoffhaltigen Partikel und die amphiphile organische Verbindung in Anwesenheit eines Lösungsmittels dispergiert werden,

b. Sprühtrocknen der Dispersion, und

c. Bewirken von Karbonisierung der sprühgetrockneten Partikel, die die amphiphile organische Verbindung umfassen, an der Oberfläche der Partikel.

2. Verfahren nach Anspruch 1, wobei die kohlenstoffhaltigen Partikel, deren Oberfläche modifiziert werden soll, ausgewählt werden aus graphithaltigen Partikeln, darunter natürliches oder synthetisches Graphit, geschiefertes Graphit, Graphen, Graphen mit wenigen Schichten, Graphitfasern, Nanographit, oder nicht graphithaltiger Kohlenstoff, darunter Ruß, mineralöl- oder kohlebasierter Koks, glasartiger Kohlenstoff, Nanoröhren, Fullerene oder Kombinationen davon, wahlweise zusammen mit anderen nicht kohlenstoffhaltigen Partikeln (z. B. Metallpartikeln).

3. Verfahren nach Anspruch 1 oder Anspruch 2, wobei die kohlenstoffhaltigen Partikel, deren Oberfläche modifiziert werden soll, **gekennzeichnet sind durch** ein Verhältnis der Peakflächen der Reflexionen [004] und [110] (Peakflächen-% [004]/[110]) von größer als 3, größer als 4, größer als 5, größer als 6, größer als 7, größer als 8, größer als 9 oder größer als 10.

4. Verfahren nach einem der Ansprüche 1 bis 3, wobei das Lösungsmittel ein polares Lösungsmittel ist.

5. Verfahren nach Anspruch 4, wobei das Lösungsmittel ausgewählt wird aus Wasser, Methanol, Ethanol, Propanol, Isopropanol und Aceton, wobei das Lösungsmittel wahlweise Wasser ist.

6. Verfahren nach einem der Ansprüche 1 bis 5, wobei die amphiphile organische Verbindung in einem Verhältnis von kleiner oder gleich 1:3 (w/w) in Bezug auf die zu beschichtenden kohlenstoffhaltigen Partikel zugesetzt wird.

7. Verfahren nach einem der Ansprüche 1 bis 6, wobei der Dispersion weitere Zusatzstoffe zugesetzt werden, wobei die Zusatzstoffe wahlweise ausgewählt werden aus der Gruppe bestehend aus

Stärke, Carboxymethylcellulose, Methylcellulose, Polyacrylaten, Polyurethanen, Furfurylalkohol, Furfural, Polyvinylalkohol, Formaldehydphenolharzen, Formaldehydtetrahydrofuranharzen, Saccharose, Glucose oder anderen Zuckern, Polyethyletherketon, Polyphenylensulfid, Polyvinylchlorid, Polystyrol, Pyromellinsäure, Zitronensäure, Polyanilin, Styrol, Gerbsäure, synthetischen Latex auf Basis von Styrol-Butyl-Kautschuk, Nitril-Butyl-Kautschuk, Ammoniak, Maltodextrin, Essigsäure, Ameisensäure, Gummiarabicum, Gelatinen, Polystyrollatex, Polyvinylpyrrolidon, Polymilchsäure, Apfelsäure, Stearinsäure oder Polystyrol-Acryl-Kautschuk und Kombinationen davon.

8. Verfahren nach einem der Ansprüche 1 bis 7, wobei während des Dispersionsschritts Ruß, kolloidales Graphit, Kohlenstoffnanoröhren oder mindestes ein feines Metall/Metalloid wie etwa Silicium, Aluminium, Zinn, Silber, Kupfer, Nickel, Antimon, Germanium; Metall-/Metalloidoxide wie etwa $TiO_2$, Lithiumtitanat, $SiO_x$ oder $SnO_x$; Chalcogenide; oder Metalllegierungspulver der Dispersion zugesetzt wird; wobei das Metall/Metalloid wahlweise ausgewählt wird aus Silicium, Aluminium, Zinn oder Legierungen, die diese Metalle umfassen.

9. Verfahren nach einem der Ansprüche 1 bis 8, wobei die Karbonisierung durch eine Thermolyse unter Vakuum oder einer Inertatmosphäre erreicht wird, wahlweise unter einer Stickstoff- oder Argonatmosphäre, bei Temperaturen zwischen 600 °C und 3000 °C, oder zwischen 1000 °C und 1500 °C.

10. Verfahren nach einem der Ansprüche 1 bis 9, wobei die sprühgetrockneten Partikel vor dem Karbonisierungsschritt einer Vorbehandlung unterzogen werden, die unter Vakuum-, Luft-, Stickstoff-, Argon- oder $CO_2$-Atmosphäre bei Temperaturen von unter 700 °C oder unter 500 °C durchgeführt wird.

11. Verfahren nach einem der Ansprüche 1 bis 10, wobei die karbonisierten Partikel einer weiteren Wärmebehandlung in einer Gasatmosphäre wie etwa Stickstoff, Argon, Gemischen von Stickstoff mit Kohlenwasserstoffen wie Acetylen, Propan oder Methan, oder mit oxidierenden Gasen wie etwa Luft, Dampf oder $CO_2$ unterzogen werden, um die Morphologie und Oberflächenchemie der amorphen, mit Kohlenstoff beschichteten kohlenstoffhaltigen Partikel anzupassen, wobei die Wärmebehandlung wahlweise bei einer Temperatur zwischen 800 °C und 1600 °C ausgeführt wird.

12. Verfahren nach einem der Ansprüche 1 bis 11, wobei die Partikelgrößenverteilung der zu beschichtenden Partikel

durch einen $D_{90}$ von < 90 μm oder einen $D_{90}$ von < 25 μm und/oder einen $D_{50}$ von < 50 μm oder einen $D_{50}$ von < 20 μm gekennzeichnet ist.

13. Verfahren zum Reduzieren der BET-spezifischen Oberfläche von kohlenstoffhaltigen Partikeln, **dadurch gekennzeichnet, dass** die kohlenstoffhaltigen Partikel einem Verfahren nach einem der Ansprüche 1 bis 12 unterzogen werden.

**Revendications**

1. Procédé de préparation de particules carbonées modifiées en surface dans lequel lesdites particules carbonées sont revêtues d'une couche de surface de carbone amorphe, comprenant

   a. la dispersion de particules carbonées conjointement avec un composé organique amphiphile, le composé organique amphiphile étant une lignine sulfatée, un sel lignosulfonate, ou des mélanges de ceux-ci, et les particules carbonées et le composé organique amphiphile étant dispersés en présence d'un solvant,
   b. le séchage par pulvérisation de la dispersion, et
   c. la réalisation d'une carbonisation des particules séchées par pulvérisation comprenant le composé organique amphiphile sur la surface desdites particules.

2. Procédé selon la revendication 1, dans lequel les particules carbonées destinées à être modifiées en surface sont choisies parmi des particules graphitiques incluant le graphite naturel ou synthétique, le graphite exfolié, le graphène, le graphène à faible nombre de couches, les fibres de graphite, le nanographite, ou le carbone non graphitique, incluant le noir de carbone, le coke à base de pétrole ou de charbon, le carbone vitreux, les nanotubes, les fullerènes, ou les combinaisons de ceux-ci, éventuellement conjointement avec d'autres particules non carbonées (par exemple, des particules métalliques).

3. Procédé selon la revendication 1 ou la revendication 2, dans lequel les particules carbonées destinées à être modifiées en surface sont **caractérisées par** un rapport des aires de pic des réflexions [004] et [110] (% des aires de pic [004]/[110]) supérieur à 3, supérieur à 4, supérieur à 5, supérieur à 6, supérieur à 7, supérieur à 8, supérieur à 9 ou supérieur à 10.

4. Procédé selon l'une quelconque des revendications 1 à 3, dans lequel le solvant est un solvant polaire.

5. Procédé selon la revendication 4, dans lequel le solvant est choisi parmi l'eau, le méthanol, l'éthanol, le propanol, l'isopropanol et l'acétone, éventuellement dans lequel le solvant est l'eau.

6. Procédé selon l'une quelconque des revendications 1 à 5, dans lequel le composé organique amphiphile est ajouté dans un rapport égal ou inférieur à 1:3 (poids/poids) par rapport aux particules carbonées à revêtir.

7. Procédé selon l'une quelconque des revendications 1 à 6, dans lequel des additifs supplémentaires sont ajoutés à la dispersion, éventuellement dans lequel lesdits additifs sont choisis dans le groupe constitué de l'amidon, la carboxyméthylcellulose, la méthylcellulose, les polyacrylates, les polyuréthanes, l'alcool furfurylique, le furfural, l'alcool polyvinylique, les résines de formaldéhyde-phénol, les résines de formaldéhyde-tétrahydrofuranne, le saccharose, le glucose, ou d'autres sucres, la polyéthyl-éther-cétone, le poly(sulfure de phénylène), le poly(chlorure de vinyle), le polystyrène, l'acide pyromellitique, l'acide citrique, la polyaniline, le styrène, l'acide tannique, le latex synthétique à base de caoutchouc styrène-butyle, le caoutchouc nitrile-butyle, l'ammoniac, la maltodextrine, l'acide acétique, l'acide formique, la gomme arabique, les gélatines, le latex de polystyrène, la polyvinylpyrrolidone, le poly(acide lactique), l'acide malique, l'acide stéarique, ou le caoutchouc polystyrène acryle et leurs combinaisons.

8. Procédé selon l'une quelconque des revendications 1 à 7, dans lequel pendant l'étape de dispersion, du noir de carbone, du graphite colloïdal, des nanotubes de carbone, ou au moins un métal/métalloïde fin tel que le silicium, l'aluminium, l'étain, l'argent, le cuivre, le nickel, l'antimoine, le germanium ; des oxydes de métal/métalloïde tels que le $TiO_2$, le titanate de lithium, le $SiO_x$ ou le $SnO_x$ ; des chalcogénures ; ou une poudre d'alliage métallique sont ajoutés à la dispersion ; éventuellement dans lequel ledit métal/métalloïde est choisi parmi le silicium, l'aluminium, l'étain ou les alliages comprenant lesdits métaux.

9. Procédé selon l'une quelconque des revendications 1 à 8, dans lequel ladite carbonisation est réalisée par une décomposition thermique sous vide ou sous une atmosphère inerte, éventuellement sous une atmosphère d'azote ou d'argon, à des températures allant de 600 °C à 3000 °C, ou entre 1000 °C et 1500 °C.

10. Procédé selon l'une quelconque des revendications 1 à 9, dans lequel, avant l'étape de carbonisation, les particules séchées par pulvérisation sont soumises à un prétraitement exécuté sous vide, sous une atmosphère d'air, d'azote, d'argon ou de $CO_2$ à des températures inférieures à 700 °C ou inférieures à 500 °C.

11. Procédé selon l'une quelconque des revendications 1 à 10, dans lequel les particules carbonisées sont soumises à un traitement thermique supplémentaire dans une atmosphère gazeuse telle que de l'azote, de l'argon, des mélanges d'azote avec des hydrocarbures de type acétylène, propane ou méthane, ou avec des gaz oxydants tels que de l'air, de la vapeur ou du $CO_2$ pour ajuster la morphologie et la chimie de surface des particules carbonées revêtues de carbone amorphe, éventuellement dans lequel ledit traitement thermique est effectué à une température allant de 800 °C à 1600 °C.

12. Procédé selon l'une quelconque des revendications 1 à 11, dans lequel la distribution granulométrique desdites particules à revêtir est **caractérisée par** un $D_{90}$ de < 90 $\mu$m, ou un $D_{90}$ de < 25 $\mu$m, et/ou un $D_{50}$ de < 50 $\mu$m, ou un $D_{50}$ de < 20 $\mu$m.

13. Procédé pour réduire la surface spécifique BET de particules carbonées, **caractérisé en ce que** lesdites particules carbonées sont soumises à un procédé selon l'une quelconque des revendications 1 à 12.

## FIGURES

Figure 1:  Scanning electron microscope images of samples prepared from a graphite substrate (synthetic graphite no. 3) with varying amounts of ammonium lignosulfonate as amphiphilic molecule.

Figure 2: Scheme showing how the amphiphilic carbon precursor (shown in a)) coats the hydrophobic carbon substrate while interacting with the hydrophilic solvent in the dispersion (shown in b)).

Figure 3: Sphericity of various samples as a function of the cumulative volume distribution (Q3) in percent

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2014065488 A1

### Non-patent literature cited in the description

- Carbon Materials in Lithium-Ion Batteries. **P. NOVAK ; D. GOERS ; M.E. SPAHR.** Carbons for Electrochemical Energy Storage and Conversion Systems. CRC Press, 2010, 263-328
- Lithium-Ion Batteries-Science and Technologies. Springer, 2009
- Lithium Batteries-Science and Technology. Kluwer Academic Publishers, 2004
- Carbon Anodes for Lithium-Ion Batteries, in: New Carbon Based Materials for Electrochemical Energy Storage Systems. Springer, 2006
- **BRUNAUER ; EMMET ; TELLER.** Adsorption of Gases in Multimolecular Layers. *J. Am. Chem. Soc.,* 1938, vol. 60, 309-319
- **KLUG ; ALEXANDER.** X-ray diffraction Procedures. John Wiley & Sons Inc, 1967
- **P. SCHERRER ; GÖTTINGER.** *Nachrichten,* 1918, vol. 2, 98
- **N. IWASHITA ; C. RAE PARK ; H. FUJIMOTO ; M. SHIRAISHI ; M. INAGAKI.** *Carbon,* 2004, vol. 42, 701-714
- X-ray diffraction Procedures. John Wiley & Sons Inc, 1967
- **P. SCHERRER.** Bestimmung der Größe und der inneren Struktur von Kolloidteilchen mittels Röntgenstrahlen. *Göttinger Nachrichten,* 1918, vol. 2, 98
- Carbon Anodes for Lithium-Ion Batteries. New Carbon Based Materials for Electrochemical Energy Storage Systems. Springer, 2006
- **S. BRUNAUER ; P. H. EMMETT ; E. TELLER.** Adsorption of Gases in Multimolecular Layers. *J. Am. Chem. Soc.,* 1938, vol. 60, 309-319